# EUROPÄISCHE PATENTSCHRIFT

(11) **EP 4 479 718 B1**
(45) Veröffentlichungstag und Bekanntmachung des Hinweises auf die Patenterteilung: **09.12.2026**
(21) Anmeldenummer: 23706295.5
(22) Anmeldetag: 15.02.2023
(51) Int. Cl.: G01L 1/04, F16B 13/00, F16B 31/02, F16B 33/02, F16B 35/00, G01L 1/22, G01L 5/00, G01L 5/24

(54) **BEFESTIGUNGSELEMENT MIT IN VERJÜNGUNGSABSCHNITT ANGEORDNETEM UND MITTELS SCHUTZEINRICHTUNG GESCHÜTZTEM SENSOR**
FASTENING ELEMENT COMPRISING SENSOR ARRANGED IN A TAPERING SECTION AND PROTECTED BY MEANS OF A PROTECTIVE DEVICE
ÉLÉMENT DE FIXATION AVEC CAPTEUR DISPOSÉ DANS UNE SECTION CONIQUE ET PROTÉGÉ AU MOYEN D'UN DISPOSITIF DE PROTECTION

(30) Priorität: 16.02.2022 DE 102022103650
(43) Veröffentlichungstag der Anmeldung: 25.12.2024
(73) Patentinhaber: Adolf Würth GmbH & Co. KG, 74653 Künzelsau (DE); Würth International AG, 7000 Chur (CH)
(72) Erfinder: WOLZ, Nicolas, 63927 Bürgstadt (DE); TIEDEMANN, Benjamin, 74653 Künzelsau (DE); DJUREN, Jannik, 74670 Forchtenberg (DE); RÖCK, David, 86169 Augsburg (DE)
(74) Vertreter: Dilg, Haeusler, Schindelmann Patentanwaltsgesellschaft mbH
(86) Internationale Anmeldenummer: PCT/EP2023/053773
(87) Internationale Veröffentlichungsnummer: WO 2023/156467

(56) Entgegenhaltungen:
- WO-A1-2021/010263
- DE-A1- 10 122 316
- US-A1- 2003 000 314
- US-A1- 2012 185 002

## Beschreibung

Die Erfindung betrifft ein Befestigungselement, eine Anordnung und ein Verfahren zum Herstellen eines Befestigungselements.

Es sind verschiedene Befestigungselemente bekannt, die in einem Verankerungsgrund gesetzt werden können, zum Beispiel um ein Bauteil an dem Verankerungsgrund zu befestigen. Beispiele für solche Befestigungselemente sind Holzschrauben, Bolzenanker und Dübel.

DE 10 2009 007 425 B3 offenbart einen Sensorbolzen zur Krafterfassung. Der Sensorbolzen weist ein Sensorelement aus einem Material mit in Abhängigkeit von äußeren Krafteinwirkungen veränderlichen Lichtdurchlasseigenschaften auf, das in einem Lichtstrahlengang zwischen einer Lichtquelle und einem Lichtempfänger angeordnet ist. Das Sensorelement steht mit einer Kraftaufnahmeeinrichtung in mechanischer Wirkverbindung. Das Sensorelement kann zwischen einem Hauptschalenteil und einem Formschalenteil eingelegt werden, das durch Lagerschalen gesichert ist. Durch das Sensorelement wird ein Lichtstrahl einer in einer Endkappe angeordneten Lichtquelle gesendet und von einem in einem Gehäuse angeordneten Lichtempfänger erfasst. Bei einer Belastung des Formschalenteils durch eine äußere Kraft verformt sich der Epoxidkern des Sensorelements und der Lichtdurchlass wird verringert. Die Veränderung des Lichtsignals kann durch den Lichtempfänger erfasst und durch eine nachgeschaltete Signalverarbeitungseinrichtung ausgewertet werden. In DE 10 2009 007 425 B3 wird anschaulich eine flächig anliegende Hülse beschreiben. Auf diese Hülse kann ein Druck auf einen Sensor so ausgeübt werden, dass Messwerte verfälscht werden können. Die ist nachteilhaft.

DE 10 2014 112 151 B4 offenbart eine elektronische Schraube. Die elektronische Schraube umfasst einen Körper und ein Drehmomentsensorelement. Der Körper umfasst einen Schraubkopf, einen Schaft, welcher mit dem Schraubkopf verbunden ist, und eine Vertiefung, die sich an der Seitenwand des Schafts befindet. Das Drehmomentsensorelement ist in der Vertiefung angeordnet und misst den Drehmomentwert der elektronischen Schraube. Das Drehmomentsensorelement ist elektrisch mit einer elektronischen Drehmomentanzeige verbunden, wobei die elektronische Drehmomentanzeige den durch das Drehmomentsensorelement ermittelten Drehmomentwert anzeigt. Bei DE 10 2014 112 151 B4 ist der Sensor in einem Sackloch des Schafts angeordnet. Dies ist aufwendig und daher nachteilig. Weitere Befestigungselemente mit einem integrierten Sensor sind beispielsweise aus den Dokumenten WO 2021/010263 und US 2012/185002 bekannt.

Es ist eine Aufgabe der vorliegenden Erfindung, ein robustes und zuverlässiges Befestigungselement bereitzustellen, das einfach herstellbar ist.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist ein Befestigungselement geschaffen, aufweisend einen Schaftabschnitt, ein Verankerungsende an einem ersten Ende des Schaftabschnitts zum Verankern in einem Verankerungsgrund, ein Außenende an einem gegenüberliegenden zweiten Ende des Schaftabschnitts, das in einem in dem Verankerungsgrund verankerten Zustand an einer Außenseite des Verankerungsgrunds anzuordnen ist, einen radial verjüngten Verjüngungsabschnitt des Schaftabschnitts axial zwischen dem Verankerungsende und dem Außenende, einen zumindest teilweise in dem Verjüngungsabschnitt angeordneten Sensor zum Erfassen von Verankerungsdaten des Befestigungselements in dem Verankerungsgrund, und eine Schutzeinrichtung zum Schützen des Sensors. Die Schutzeinrichtung ist umfänglich geschlossen in dem radial verjüngten Verjüngungsabschnitt angeordnet und selbst als ringförmiger Körper ausgebildet, der in einer ringförmigen Aussparung des Schaftabschnitts angeordnet ist, die den Verjüngungsabschnitt bildet. Dies fördert zum einen ein zuverlässiges Verbleiben der Schutzeinrichtung an Ort und Stelle und vermeidet überdies die Erzeugung übermäßiger Reibungskräfte beim Setzen des Befestigungselements, da die ringförmige Schutzeinrichtung dann nicht über den Verjüngungsabschnitt in radialer Richtung übersteht.

Gemäß einem weiteren Ausführungsbeispiel der vorliegenden Erfindung ist eine Anordnung bereitgestellt, die ein Befestigungselement mit den oben beschriebenen Merkmalen und ein Empfängergerät aufweist, das zum Empfangen von mittels des Sensors erfassten Verankerungsdaten kommunizierfähig mit dem Sensor gekoppelt oder koppelbar ist.

Gemäß noch einem anderen Ausführungsbeispiel der vorliegenden Erfindung ist ein Verfahren zum Herstellen eines Befestigungselements bereitgestellt, wobei das Verfahren ein Ausbilden eines Verankerungsendes an einem ersten Ende eines Schaftabschnitts zum Verankern in einem Verankerungsgrund, ein Ausbilden eines Außenendes an einem gegenüberliegenden zweiten Ende des Schaftabschnitts, das in einem in dem Verankerungsgrund verankerten Zustand an einer Außenseite des Verankerungsgrunds anzuordnen ist, ein Ausbilden eines radial verjüngten Verjüngungsabschnitts des Schaftabschnitts axial zwischen dem Verankerungsende und dem Außenende, wobei der radial verjüngte Verjüngungsabschnitt als ringförmige Aussparung an einer radialen Außenseite des Schaftabschnitts ausgebildet wird, ein Anordnen eines Sensors zumindest teilweise in dem Verjüngungsabschnitt zum Erfassen von Verankerungsdaten des Befestigungselements in dem Verankerungsgrund und ein Ausbilden einer Schutzeinrichtung zum Schützen des Sensors aufweist, wobei die Schutzeinrichtung umfänglich geschlossen in dem radial verjüngten Verjüngungsabschnitt angeordnet wird.

Im Rahmen der vorliegenden Anmeldung kann unter dem Begriff "Verankerungsgrund" insbesondere ein zum Verankern des Befestigungselements geeigneter Untergrund verstanden werden. Ein solcher Verankerungsgrund kann insbesondere eine Wand, weiter insbesondere eine vertikale Wand, sein oder aufweisen. Auch eine Brücke oder ein anderes Bauwerk oder ein Gebäude kann einen Verankerungsgrund darstellen. Es ist auch möglich, dass der Verankerungsgrund durch ein Bauteil gebildet ist, beispielsweise durch ein Verbindungselement oder durch einen Balken. Materialien für einen solchen Verankerungsgrund sind insbesondere Holz oder Holzbaustoffe, oder aber auch Beton- und Mauerwerksbaustoffe, Metall oder Kunststoffbauteile. Ferner kann ein solcher Verankerungsgrund auch ein beliebiger Kompositwerkstoff aus mehreren unterschiedlichen Materialkomponenten sein. Der Verankerungsgrund kann Hohlräume aufweisen oder kann massiv (d.h. von Hohlräumen frei) sein.

Im Rahmen der vorliegenden Anmeldung kann unter dem Begriff "Befestigungselement" insbesondere ein Körper, ein Bauteil oder eine Baugruppe aus mehreren Bauteilen verstanden werden, geeignet zum Befestigen an bzw. in einem Verankerungsgrund. Insbesondere kann mittels eines solchen Befestigungselements ein anderes Bauteil (zum Beispiel ein Fensterrahmen, ein Paneel oder eine Leuchte) an einem Untergrund befestigt werden.

Im Rahmen der vorliegenden Anmeldung kann unter dem Begriff "Schaftabschnitt" insbesondere ein im Wesentlichen zylindrischer, bolzenförmiger oder stabförmiger Körper verstanden werden, der zum Beispiel aus einem Metall oder einem Kunststoff hergestellt sein kann. Ein solcher Schaftabschnitt kann ein hohler oder ein massiver Körper sein, an und/oder in dem einer oder mehrere funktionelle Abschnitte ausgebildet sein.

Im Rahmen der vorliegenden Anmeldung kann unter dem Begriff "Verankerungsende" insbesondere ein Endabschnitt des Schaftabschnitts oder an dem Schaftabschnitt verstanden werden, der zum Verankern in dem Verankerungsgrund funktionell ausgebildet ist. Dies kann das Verankerungsende allein (beispielsweise durch ein Verankerungsgewinde oder einen Konuskörper mit Spreizhülse) oder in Zusammenwirkung mit mindestens einem anderen Körper oder Element (zum Beispiel einem separaten Spreizkörper oder chemischer Dübelmasse, wie zum Beispiel Mörtel) bewerkstelligen.

Im Rahmen der vorliegenden Anmeldung kann unter dem Begriff "Außenende" ein Endabschnitt des Schaftabschnitts oder an dem Schaftabschnitt verstanden werden, der im in einem Untergrund gesetzten Zustand des Befestigungselements außerhalb des Verankerungsgrunds oder in einem außenseitigen Endbereich eines Verankerungslochs in dem Verankerungsgrund angeordnet sein kann. Insbesondere kann das Außenende funktionell zum Befestigen eines Bauteils (zum Beispiel eines Fensterrahmens, eines Paneels oder einer Leuchte) ausgebildet sein, beispielsweise mit einem Bauteilgewinde.

Im Rahmen der vorliegenden Anmeldung kann unter dem Begriff "radial verjüngter Verjüngungsabschnitt" insbesondere ein axial zentraler Bereich des Schaftabschnitts verstanden werden, der eine geringere Radialausdehnung hat als ein jeweils angrenzender anderer Bereich des Schaftabschnitts. Der radial verjüngte Verjüngungsabschnitt kann hierbei so bemessen sein, dass er einen radial zurückversetzten Aufnahmeraum für mindestens einen Sensor bildet, so dass der mindestens eine Sensor beim Setzen des Befestigungselements vor einer mechanischen Beschädigung durch eine unerwünschte Wechselwirkung mit einer Wandung des Verankerungsgrunds geschützt ist. Der radiale Verjüngungsabschnitt kann auch einen mechanisch schwächsten Abschnitt des Befestigungselements bilden, da er aufgrund seiner Verjüngung besonders anfällig für Verbiegung und/oder Zugspannungen sein kann. Daher eignet sich der Verjüngungsabschnitt besonders gut zum Anordnen des Sensors, da dieser an dieser Position bei Einwirken einer Last ein besonders starkes Sensorsignal erfassen kann.

Im Rahmen der vorliegenden Anmeldung kann unter dem Begriff "Sensor" jede funktionelle Entität verstanden werden, mit der Sensorinformation während des Setzens und/oder nach dem Setzen (insbesondere auch lange nach dem Setzen, zum Beispiel Jahre später) des Befestigungselements sensorisch erkennbar und zur Auswertung übermittelbar ist. Zum Beispiel kann ein solcher Sensor eine einstückige Komponente sein, die Sensordaten (insbesondere Verankerungsdaten) erfasst und als Signal (beispielsweise elektrisch, optisch, elektromagnetisch, etc.) weiterleitet. Es ist auch möglich, dass ein Sensor aus mehreren funktionell zusammenwirkenden Sensorkomponenten gebildet ist. Sensoren können zum Erfassen von mindestens einem physikalischen und/oder chemischen Parameter ausgebildet sein, zum Beispiel Druck, Temperatur, mechanische Spannung, Drehmoment, Kraft, chemische Umgebung, Untergrundbeschaffenheit, etc. Gemäß einem exemplarischen Ausführungsbeispiel der Erfindung kann als der mindestens eine Sensor zum Beispiel ein Dehnmessstreifen, ein Feuchtigkeitssensor, ein Schwingungssensor, ein Ultraschallsensor, ein induktiver Sensor und/oder ein kapazitiver Sensor eingesetzt werden.

Im Rahmen der vorliegenden Anmeldung kann unter dem Begriff "Verankerungsdaten" insbesondere jeder Parameter verstanden werden, der für einen Verankerungsvorgang und/oder einen Verankerungszustand und/oder einen Verankerungserfolg oder -misserfolg und/oder für eine entsprechende Änderung über die Zeit hinweg indikative Information bereitstellt. Sensorisch erfasste Verankerungsdaten können über einen oder über mehrere Parameter Aufschluss geben. Wenn solche Verankerungsdaten, insbesondere einmalig, regelmäßig oder unregelmäßig wiederkehrend oder kontinuierlich, an eine Übermittlungseinrichtung übermittelt werden, kann anhand der Verankerungsdaten ein korrektes Setzen des Befestigungselements in dem Verankerungsgrund oder ein Problem oder ein Misserfolg im Zusammenhang mit dem Setzen des Befestigungselements in dem Verankerungsgrund ermittelt und erkannt werden. Auch können langfristige Veränderungen der Verankerungskraft des Befestigungselements in dem Verankerungsgrund sensorisch erkannt werden.

Im Rahmen der vorliegenden Anmeldung kann unter dem Begriff "Schutzeinrichtung" jede beliebige körperliche Struktur und/oder jeder beliebige Mechanismus verstanden werden, die bzw. der mindestens einen in dem Verjüngungsabschnitt untergebrachten Sensor einen Schutz vor insbesondere mechanischer Beschädigung durch Umgebungsmaterial im Verankerungsgrund liefert, ohne die Sensorfunktion oder Sensorgenauigkeit hierbei zu beeinträchtigen. Der Schutz vor Beeinträchtigung kann hierbei insbesondere einen Schutz vor mechanischer Beschädigung beim und/oder nach dem Setzen des Befestigungselements in dem Verankerungsgrund bezeichnen, aber auch eine unerwünschte Wechselwirkung mit einem gasförmigen, flüssigen und/oder festen Medium beim Setzen und/oder nach dem Setzen des Befestigungselements in dem Verankerungsgrund bezeichnen. Eine solche Wechselwirkung kann mit Material des Verankerungsgrunds oder mit einem Hilfsmaterial (wie zum Beispiel einem Epoxidharz oder Mörtel im Falle eines chemischen Dübels) in einem Umgebungsbereich des Befestigungselements bezeichnen.

Gemäß einem exemplarischen Ausführungsbeispiel der Erfindung ist ein Befestigungselement geschaffen, das mindestens einen Sensor aufweist, der in einem verjüngten Schaftbereich geschützt untergebracht werden kann. Ein derart vorgesehener Sensor kann zum Erfassen mindestens eines Verankerungsparameters oder anderer Verankerungsdaten beim Setzen und/oder nach dem Setzen des Befestigungselements in einem Verankerungsgrund ausgebildet und konfiguriert sein. Durch das Anordnen des mindestens einen Sensors in dem radial zurückversetzten Verjüngungsabschnitt des Befestigungselements kann eine Beschädigung des mindestens einen Sensors beim Setzen des Befestigungselements zuverlässig vermieden werden, beispielsweise beim Einschlagen eines Bolzenankers in ein Verankerungsloch in einem beispielsweise aus Beton gebildeten Verankerungsgrund. Auch kann ein solches radiales Zurückversetzen des Sensors diesen davor schützen, dass von dem Verankerungsgrund mantelseitige Kräfte auf den Sensor übertragen werden, welche die eigentlich zu erfassenden Sensordaten verfälschen können. Als besonders vorteilhaft hat es sich erwiesen, den zumindest teilweise in dem Verjüngungsabschnitt angeordneten Sensor zusätzlich mit einer Schutzeinrichtung auszustatten (insbesondere zu bedecken), welche die sensorische Aktivität des Sensors ungestört aufrechterhält und dennoch den Sensor vor Beschädigung oder sogar Zerstörung beim Setzen oder im Betrieb des Befestigungselements schützt. Auf diese Weise ist es möglich, einen Sensor an einer Position von Interesse anzubringen, die sich im gesetzten Zustand im Inneren des Verankerungsgrunds befindet. Spezifisch an diesem präzise auswählbaren Ort von Interesse können dann Verankerungsdaten von dem gesetzten Sensor ins Verankerungsgrundäußere übermittelt werden. Ein Benutzer erhält somit eine sensorische Rückmeldung, die den Erfolg und/oder Misserfolg eines Verankerungsprozesses anzeigt und einem Benutzer daher die Überprüfung der Korrektheit des Setzvorgangs ermöglicht. Alternativ oder ergänzend kann der an dem Befestigungselement integrierte mindestens eine Sensor auch nach - und sogar Jahre nach - Setzen des Befestigungselements Informationen über den Setzzustand liefern, beispielsweise eine Verringerung oder einen Verlust von Befestigungs- oder Setzkraft des Befestigungselements in dem Verankerungsgrund erkennbar machen. Eine solche reduzierte Verankerungskraft kann beispielsweise nach einem längeren Zeitraum in einem Gebäude (zum Beispiel einer Brücke) auftreten, in dem ein Dübel oder Bolzenanker gesetzt worden ist. Eine kritische Verringerung der Setzkraft kann daher ausreichend lange vor einem Versagensfall erkannt werden, sodass rechtzeitig Gegenmaßnahmen ergriffen werden können.

Im Weiteren werden zusätzliche exemplarische Ausführungsbeispiele des Befestigungselements, der Anordnung und des Verfahrens beschrieben.

Gemäß einem exemplarischen Ausführungsbeispiel kann das Befestigungselement eine Übertragungseinrichtung zum Übertragen der Verankerungsdaten von dem Sensor zu einem externen Empfängergerät aufweisen. Unter Einsatz einer solchen Übermittlungseinrichtung können Sensordaten (zum Beispiel elektrisch, optisch oder elektromagnetisch) vom Setzort des Sensors an ein Äußeres des Verankerungsgrunds zur Weiterverarbeitung oder Auswertung übermittelt werden.

Gemäß einem exemplarischen Ausführungsbeispiel kann die Übertragungseinrichtung mindestens ein Übertragungskabel aufweisen, das zumindest abschnittsweise entlang des Schaftabschnitts verlaufend angeordnet ist. Gemäß einer solchen Ausgestaltung kann kabelgebunden Sensorinformation vom Sensor an eine Zielentität beziehungsweise eine Empfängereinrichtung übermittelt werden. Dies stellt eine einfache und fehlerrobuste Lösung dar. Ein solches Übertragungskabel kann zum Beispiel außen entlang des Schaftabschnitts (zum Beispiel versenkt in einem weiteren verjüngten Bereich, zum Beispiel einer Nut) oder im Inneren des Schaftabschnitts geführt werden.

Gemäß einem exemplarischen Ausführungsbeispiel kann die Übertragungseinrichtung zum drahtlosen Übertragen der Verankerungsdaten ausgebildet sein, insbesondere mittels zumindest einer Technologie aus einer Gruppe bestehend aus Near Field Communication (NFC), Bluetooth, Wireless Local Area Network (WLAN), Narrowband Internet of Things (NB-IoT), Long Term Evolution (LTE) und Low Power Wide Area Network (LPWAN). Gemäß einer solchen Ausgestaltung können für den Sensor Daten drahtlos vom Inneren des Verankerungsgrunds bis zu einem Äußeren des Verankerungsgrunds zur Weiterverarbeitung oder Auswertung an ein Empfängergerät übertragen werden. Kabel können dann zumindest abschnittsweise mit Vorteil entbehrlich sein. Zum Beispiel kann die Übermittlung unter Verwendung von Funkwellen einer geeigneten Frequenz, insbesondere im Hochfrequenzbereich, übertragen werden.

Gemäß einem exemplarischen Ausführungsbeispiel kann der Sensor zum Erfassen von zumindest einem Parameter aus einer Gruppe ausgebildet sein, die besteht aus Temperatur, Zugspannung, Dehnung und Drehmoment. Beispielsweise kann eine von einer Soll-Temperatur oder einem Soll-Temperaturbereich abweichende Ist-Temperatur des Sensors beim Setzen oder danach auf Probleme durch übermäßige Reibung oder Kraftübertragung hindeuten. Eine exzessive Dehnung des Schaftabschnitts beim Setzen oder danach kann zum Beispiel mittels eines Dehnmessstreifens oder eines anderen entsprechend ausgebildeten Sensors erkannt werden. Auch eine solche übermäßige Dehnung kann auf Probleme beim Setzen, beispielsweise ein Verkeilen des Befestigungselements in dem Verankerungsgrund, hindeuten. Auch ein Drehmoment während des Setzens oder danach kann den Erfolg oder Misserfolg des Setzvorgangs dokumentieren und einem Benutzer eine entsprechende Information geben. Dadurch kann die Zuverlässigkeit der Beurteilung eines Setzvorgangs durch einen Benutzer insbesondere bei sicherheitskritischen Anwendungen sichergestellt werden.

Gemäß einem exemplarischen Ausführungsbeispiel kann der Sensor einen Dehnmessstreifen aufweisen. Bevorzugt kann der Sensor also als DMS-Sensor ausgebildet sein und eine Dehnung an dem Schaftabschnitt während und/oder nach dem Setzen detektieren. Dadurch können zum Beispiel kritische Zugspannungen zuverlässig erkannt werden. Diese Information hat sich als besonders wertvoll für die Beurteilung des Setzerfolgs erwiesen. Darüber hinaus kann ein Dehnmessstreifen problemlos in einem Verjüngungsabschnitt des Schaftabschnitts angebracht werden. Auch bei Bedeckung durch eine Schutzeinrichtung, zum Beispiel einen kompressiblen Schaum, kann die Funktionsfähigkeit eines Dehnmessstreifens aufrechterhalten bleiben, um Dehnungen des Schaftabschnitts präzise und fehlerrobust sensorisch zu erfassen.

Gemäß einem exemplarischen Ausführungsbeispiel kann das Befestigungselement zumindest einen weiteren zumindest teilweise in dem Verjüngungsabschnitt angeordneten Sensor zum Erfassen von weiteren Verankerungsdaten des Befestigungselements in dem Verankerungsgrund aufweisen. Somit ist es auch möglich, mehrere Sensoren an dem Befestigungselement zu integrieren. Dies kann dann zum Beispiel eine ortsaufgelöste Messung eines Verankerungsparameters ermöglichen, zum Beispiel durch mehrere Dehnmessstreifen, die entlang eines Umfangs und/oder entlang einer axialen Richtung des Schaftabschnitts des Befestigungselements angeordnet sind. Alternativ oder ergänzend können die mehreren Sensoren aber auch unterschiedliche (insbesondere komplementäre) Parameter erfassen, beispielsweise Dehnung und Temperatur. Dies erlaubt eine Verfeinerung des Rückschlusses des Setzergebnisses.

Gemäß einem exemplarischen Ausführungsbeispiel kann die Schutzeinrichtung kompressibles Material aufweisen, insbesondere einen kompressiblen festen Schaum. Besonders bevorzugt ist es, die Schutzeinrichtung aus einem kompressiblen Material, wie zum Beispiel einem Schaum oder einem Gummi, herzustellen. Auf diese Weise ist es möglich, den in dem Verjüngungsabschnitt angeordneten Sensor einerseits zuverlässig vor einer mechanischen Beeinträchtigung und/oder einer chemischen Beeinträchtigung zu schützen und gleichzeitig die Empfindlichkeit des Sensors zum Detektieren der Verankerungsdaten aufrechtzuerhalten. Parasitäre Kräfte, die durch den Sensor nicht erfasst werden sollen, können daher von dem Sensor ferngehalten werden.

Gemäß einem exemplarischen Ausführungsbeispiel kann die Schutzeinrichtung feuchtigkeitsundurchlässiges Material aufweisen, insbesondere einen feuchtigkeitsundurchlässigen Schaum. Wenn die Schutzeinrichtung aus einem feuchtigkeitsundurchlässigen Material ausgebildet ist, kann selbst ein feuchtigkeitsempfindlicher Sensor des Befestigungselements auch in feuchter Umgebung (zum Beispiel in feuchtem Mauerwerk) störungsfrei die Verankerungsdaten erfassen.

Gemäß einem exemplarischen Ausführungsbeispiel kann die Schutzeinrichtung ein aromatisches Isocyanat aufweisen. Isocyanat hat sich als besonders wirksam erwiesen, gleichzeitig eine Kompressibilität als auch eine mechanische Schutzfunktion bereitzustellen, die den Sensor vor Artefakten bewahrt und dessen Empfindlichkeit aufrechterhält. Außerdem ist ein solches Material flüssigkeitsundurchlässig und erlaubt somit einen Einsatz des Befestigungselements samt Sensor in feuchter Umgebung.

Gemäß einem exemplarischen Ausführungsbeispiel kann die Schutzeinrichtung zumindest teilweise in dem radial verjüngten Verjüngungsabschnitt und den Sensor schützend bedeckend angeordnet sein. Indem auch die Schutzeinrichtung ganz oder teilweise in dem Verjüngungsabschnitt, mithin radial zurückversetzt oder fluchtend mit dem Rest des Schaftabschnitts, angeordnet ist, stört die Schutzeinrichtung den Setzvorgang des Befestigungselements, beispielsweise ein Einschlagen eines Bolzenankers oder ein Eindrehen einer Holzschraube, nicht. Auch sind dadurch übermäßige mechanische Einwirkungen auf den von der Schutzeinrichtung bedeckten Sensor beim Setzen des Befestigungselements zuverlässig vermieden.

Gemäß einem exemplarischen Ausführungsbeispiel kann die Schutzeinrichtung in dem radial verjüngten Verjüngungsabschnitt bis zu einer solchen radialen Höhe angeordnet sein, dass die Schutzeinrichtung radial nicht über den Schaftabschnitt übersteht, insbesondere mit diesem bündig abschließt. Anschaulich können Schutzeinrichtung und daran angeschlossene Abschnitte des Schaftabschnitts fluchten.

Gemäß einem exemplarischen Ausführungsbeispiel kann die Schutzeinrichtung (alternativ oder ergänzend zu dem kompressiblen Material) mindestens eine Schutzrampe aufweisen, die bezogen auf eine Einschraubrichtung des Befestigungselements hinter (insbesondere unmittelbar hinter) dem Sensor angeordnet ist, insbesondere zumindest teilweise in dem radial verjüngten Verjüngungsabschnitt. Alternativ oder ergänzend zum Ausbilden der Schutzeinrichtung als kompressibler Ring kann die Schutzeinrichtung auch als (beispielsweise aus einem Metall ausgebildete) Rampe vorgesehen sein. Letztere kann bei einem drehenden Setzen des Befestigungselements in einem Untergrund einen radialen Überstand gegenüber dem Sensor definieren, was zuverlässig einen radialen Abstand zwischen dem Sensor in dem Verjüngungsabschnitt und einer Wandung des Verankerungsgrunds aufrechterhält. Die Schutzrampe kann so ausgebildet sein, dass diese ausgehend von einem radialen Ende, das stetig mit dem Verjüngungsabschnitt abschließt, sich kontinuierlich radial nach außen erstreckt. Die Schutzrampe erstreckt sich dann bis zu einer solchen radialen Position, dass an dieser Stelle ein abruptes Rückführen der Schutzrampe zu einer radialen Position erfolgt, die dem Verjüngungsabschnitt entspricht. An diesen radial sich am weitesten nach außen erstreckenden Endbereich der Schutzrampe schließt sich der Sensor so an, dass der Sensor in einem Abschirmbereich der Schutzrampe angeordnet ist. In einer Eindrehrichtung kann sich also der Sensor direkt oder mit Abstand an einen sich radial am weitesten nach außen erstreckenden Endbereich der Schutzrampe anschließen.

Gemäß einem exemplarischen Ausführungsbeispiel kann das Verankerungsende ein Verankerungsgewinde aufweisen, insbesondere ein Betonschraubengewinde oder ein Holzschraubengewinde oder auch ein metrisches Gewinde. Wenn das Verankerungsende mit einem Verankerungsgewinde versehen ist, kann ein drehendes Setzen des Befestigungselements in den Verankerungsgrund gefördert werden. Das Verankerungsgewinde kann in einer Spitze des Befestigungselements enden, beispielsweise um ein vorbohrungsfreies Setzen eines Befestigungselements in einem Untergrund zu fördern, zum Beispiel ein vorbohrungsfreies Setzen einer Holzschraube in einem Holz-Verankerungsgrund. Alternativ kann das Verankerungsgewinde auch an einer planen Stirnfläche des Befestigungselements enden, zum Beispiel wenn das Befestigungselement drehend in einen mit einer Vorbohrung versehenen Verankerungsgrund gesetzt wird.

Gemäß einem exemplarischen Ausführungsbeispiel kann das Außenende ein Außengewinde, insbesondere ein metrisches Außengewinde, aufweisen. An dem Außenende des Befestigungselements kann ein Außengewinde angebracht sein, das beispielsweise zum Verspannen oder Verspreizen des Befestigungselements eingesetzt wird. Dies kann beispielsweise bei einem Bolzenanker der Fall sein, der zunächst in ein Verankerungsloch in dem Verankerungsgrund eingeschlagen werden kann, bevor zum Beispiel durch Aufschrauben einer Mutter auf das Außengewinde ein axialer Druck auf das Befestigungselement ausgeübt werden kann, das im Inneren des Verankerungsgrunds zu einem Verschieben einer Spreizhülse entlang eines Konuskörpers des Bolzenankers führt, was eine Verankerungskraft bewirkt. Es ist auch möglich, das Außengewinde des Befestigungselements zum Befestigen eines Bauteils einzusetzen, beispielsweise zum Aufschrauben einer Befestigungsmutter unter Anbringen eines zu befestigenden Bauteils zwischen Mutter und Verankerungsgrund.

Gemäß einem exemplarischen Ausführungsbeispiel kann der Schaftabschnitt zumindest abschnittsweise gewindefrei ausgebildet sein. Somit ist es möglich, dass ein Teil des Schaftabschnitts von einem Gewinde frei ist, das heißt ein glatter Bolzenabschnitt ist. Dies kann zum Beispiel ein reibungsarmes Setzen des Befestigungselements fördern. Ein anderer Abschnitt des Schaftabschnitts kann mit einem Gewinde ausgestattet sein, beispielsweise mit dem oben beschriebenen Verankerungsgewinde und/oder Außengewinde.

Der radial verjüngte Verjüngungsabschnitt ist als ringförmige Aussparung an einer radialen Außenseite des Schaftabschnitts ausgebildet. Mit Vorteil kann der Verjüngungsabschnitt also in einem Außenbereich des Befestigungsabschnitts angeordnet sein. Dies erlaubt zum einen eine besonders einfache Montage des mindestens einen Sensors, der einfach in die Aussparung an einer Außenseite des Schaftabschnitts eingelegt und dort (zum Beispiel klebend) befestigt werden kann. Zum anderen ist die beschriebene Position an einer Außenseite des Schaftabschnitts eine besonders geeignete Möglichkeit, Sensordaten an einer maßgeblichen Position zu erfassen. Erfolg oder Misserfolg eines Setzvorgangs kann besonders zuverlässig an einer Außenseite des Schaftabschnitts erkannt werden, da dort ein beispielsweise problematischer Setzvorgang zu einer charakteristischen Erhöhung der Dehnung führen kann. Auch die Abnahme der Setzkraft über die Zeit hinweg bzw. das Ausbilden einer Zugspannung kann an einem solchen Verjüngungsabschnitt mit besonders hoher Genauigkeit sensorisch erkannt werden.

Gemäß einem exemplarischen Ausführungsbeispiel kann das Befestigungselement als Holzschraube ausgebildet sein, insbesondere zur Durchsteckmontage. Zum Beispiel kann eine Holzschraube durch ein Loch in einem an einem Verankerungsgrund aus Holz anzubringenden Bauteil hindurchgeführt werden und kann dann (mit oder ohne Vorbohrung) in den Holz-Verankerungsgrund gesetzt werden.

Gemäß einem exemplarischen Ausführungsbeispiel kann das Befestigungselement als Betonschraube ausgebildet sein, insbesondere zur Durchsteckmontage. Eine solche Betonschraube kann beispielsweise durch ein Loch in einem an einem Beton-Verankerungsuntergrund anzubringenden Bauteil durchgeführt werden und kann dann, vorzugsweise mit Vorbohrung, in den Beton-Verankerungsgrund eingeführt werden.

Gemäß einem exemplarischen Ausführungsbeispiel kann das Befestigungselement als Bolzenanker, insbesondere als Betonanker, ausgebildet sein. Im Rahmen der vorliegenden Anmeldung kann unter einem "Bolzenanker" insbesondere eine in einem Setzloch eines Verankerungsgrunds verankerbare mehrteilige Befestigungsvorrichtung verstanden werden, die zumindest einen Bolzenkörper und eine darauf montierte Spreizhülse aufweist. Ein Bolzenanker kann in ein Setzloch eingeführt werden und dann durch eine axiale Relativverschiebung zwischen Bolzenkörper und Spreizhülse in eine Konfiguration überführt werden, in der die Spreizhülse durch Eindringen eines endseitig radial erweiterten Spreizkörpers des Bolzenkörpers in radialer Richtung expandiert wird. Dadurch kommt es zu einer Verklemmung zwischen Spreizhülse und einer Wandung des Verankerungsgrunds, wodurch der Bolzenanker in dem Verankerungsgrund gesetzt ist. An einem Bolzenanker kann ein Gegenstand befestigt werden, beispielsweise über ein Gewinde, einen Haken, eine Öse, etc., des Bolzenankers. Ein Bolzenanker weist einen beispielsweise konusförmigen Spreizkörper und eine Spreizhülse auf, die durch Einziehen des Spreizkörpers in die Spreizhülse aufgespreizt werden kann. Der Spreizkörper kann einstückig an einen Schaftabschnitt angestückt sein, auf dem die Spreizhülse aufgesetzt werden kann. Zur Verankerung des Spreizankers kann dieser mit dem Spreizkörper voraus in ein Setzloch in einem Verankerungsgrund eingebracht werden, wobei auch die Spreizhülse in das Setzloch eingeführt werden kann. Danach kann der Spreizkörper zurückgezogen werden, ohne dass die im Setzloch reibschlüssig angeordnete Spreizhülse das Setzloch verlässt. Der Spreizkörper kann durch die beschriebene Vorgehensweise in die Spreizhülse eingezogen werden, wodurch die Spreizhülse in radialer Richtung aufspreizt. Dies verankert den Bolzenanker im Bohrloch. An einem außerhalb des Verankerungsgrunds verbleibenden Abschnitts des Bolzenankers kann ein Gegenstand befestigt werden. Ein Bolzenanker kann an dem Verankerungsende eine konusförmige Erweiterung aufweisen, die mit einer auf dem Schaftabschnitt beweglich angeordneten Spreizhülse zusammenwirken kann. Ist der Bolzenanker in einem Verankerungsgrund (zum Beispiel aus Beton) eingeschlagen worden, kann ein Aufdrehen einer Mutter auf ein Außenende des Befestigungselements eine Axialkraft zwischen Spreizhülse und Konuskörper bewirken, das heißt genauer gesagt ein Aufschieben der Spreizhülse auf den Konuskörper unter Ausbilden einer hohen Verankerungskraft.

Gemäß einem exemplarischen Ausführungsbeispiel kann das Befestigungselement als Ankerstange ausgebildet sein, insbesondere für einen chemischen Dübel. Wenn das Befestigungselement als (Gewinde- oder gewindefreie) Ankerstange ausgebildet ist, kann diese in ein Befestigungsloch des Verankerungsgrunds eingesetzt werden. Durch Einbringen eines aushärtbaren Mediums (zum Beispiel eines Epoxidharzes) bzw. von Mörtel vor oder nach dem Einführen der Ankerstange in den Verankerungsgrund kann es dann zum Ausbilden einer chemischen Verbindung zwischen Verankerungsgrund, Befestigungselement und dem aushärtbaren Medium kommen.

Gemäß einem exemplarischen Ausführungsbeispiel kann das Befestigungselement als Kunststoffdübel ausgebildet sein, insbesondere für eine Holzschraube. Wenn das Befestigungselement als Dübel (insbesondere aus Kunststoff oder auch aus Metall) ausgebildet ist, kann ein solcher Dübel in ein Verankerungsloch im Verankerungsgrund eingeschlagen werden. Nachfolgend kann eine Schraube, zum Beispiel eine Holzschraube, in einen Aufnahmehohlraum des Dübels eingedreht werden, wodurch es zum Aufspreizen von Spreizelementen des Dübels und somit zum Ausbilden einer hohen Setzkraft kommt.

Andere Befestigungselemente sind natürlich ebenfalls möglich.

Darüber hinaus kann die Anordnung optional auch den Verankerungsgrund aufweisen, wenn das Befestigungselement darin gesetzt ist.

Gemäß einem exemplarischen Ausführungsbeispiel kann das Empfängergerät zum drahtlosen Kommunizieren mit dem Sensor ausgebildet sein. Das Empfängergerät kann also eine drahtlose Kommunikationseinrichtung zum drahtlosen Kommunizieren mit dem Sensor des Befestigungselements aufweisen, selbst wenn der Sensor in einem Inneren des Verankerungsgrunds angeordnet ist. Alternativ oder ergänzend kann das Empfängergerät aber auch zum drahtgebundenen Kommunizieren mit dem Sensor ausgebildet sein, beispielsweise unter Verwendung eines Übermittlungskabels zwischen Sensor und Empfängergerät.

Gemäß einem exemplarischen Ausführungsbeispiel kann das Empfängergerät aus einer Gruppe ausgewählt sein, die besteht aus einem Computer und einem portablen Nutzer-Endgerät, insbesondere einem Smartphone oder einem Tablet. Beispielsweise kann ein Benutzer bequem an seinem Laptop oder an seinem Mobilfunkgerät den Erfolg eines Setzvorgangs ablesen, wenn Laptop oder Mobilfunkgerät mit dem Sensor zum Datenaustausch kommunizierfähig gekoppelt ist. Es ist auch möglich, als Empfängergerät einen Router einzusetzen, der in einem Kommunikationsnetzwerks kommunizierfähig implementiert werden kann.

Gemäß einem exemplarischen Ausführungsbeispiel kann als Schutzeinrichtung der zumindest teilweise in dem Verjüngungsabschnitt angeordnete Sensor mit Schaum umspritzt werden, der zumindest teilweise in den Verjüngungsabschnitt eingespritzt wird. Wenn der beispielsweise außenseitig an dem Verjüngungsabschnitt des Schaftabschnitts anzubringende mindestens eine Sensor installiert ist, kann durch einfaches Umspritzen mit einem Schaum (zum Beispiel auf Epoxidbasis) der Sensor an Ort und Stelle immobilisiert werden und vor mechanischen Einflüssen insbesondere während des Setzvorgangs geschützt werden. Gleichzeitig kann ein mit einem kompressiblen Schaum umspritzter Sensor, beispielsweise ein Dehnmessstreifen, ohne Verlust von Nachweisgenauigkeit Dehnungen oder andere Parameter an dem gesetzten Befestigungselement erfassen. Auch ist es vorteilhaft, die Schutzvorrichtung in einfacher Weise mittels bloßen Umspritzens am Befestigungselement anzubringen.

Gemäß einem exemplarischen Ausführungsbeispiel kann das Befestigungselement während des Spritzens von Schaum zumindest abschnittsweise von einer Schale umgeben werden. Wenn zumindest der Verjüngungsabschnitt beim Umspritzen mit Schaum außenseitig durch eine Schale umgeben ist, kann präzise vorgegeben werden, bis zu welcher Radialerstreckung sich die schaumartige Schutzvorrichtung erstreckt. Dies erlaubt mit einfachen herstellungstechnischen Mitteln die Sicherstellung eines reibungsarmen Setzens des Befestigungselements in einem Verankerungsgrund.

Im Folgenden werden exemplarische Ausführungsbeispiele der vorliegenden Erfindung mit Verweis auf die folgenden Figuren detailliert beschrieben.
Figur 1 zeigt ein Befestigungselement gemäß einem exemplarischen Ausführungsbeispiel der Erfindung.
Figur 2 zeigt ein Detail eines Befestigungselements gemäß einem exemplarischen Ausführungsbeispiel der Erfindung.
Figur 3 zeigt eine Querschnittsansicht eines Befestigungselements gemäß einem exemplarischen Ausführungsbeispiel der Erfindung.
Figur 4 zeigt ein Befestigungselement gemäß einem anderen exemplarischen Ausführungsbeispiel der Erfindung.
Figur 5 zeigt ein Befestigungselement gemäß einem weiteren exemplarischen Ausführungsbeispiel der Erfindung.
Figur 6 zeigt ein Befestigungselement gemäß noch einem anderen exemplarischen Ausführungsbeispiel der Erfindung.
Figur 7 zeigt eine Querschnittsansicht eines Befestigungselements gemäß einem weiteren exemplarischen Ausführungsbeispiel der Erfindung.
Figur 8 zeigt ein Befestigungselement gemäß noch einem anderen exemplarischen Ausführungsbeispiel der Erfindung.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden.

Gemäß einem Ausführungsbeispiel der Erfindung kann ein Befestigungselement, zum Beispiel ein Betonanker, mit einem Sensor (vorzugsweise einem Dehnmessstreifen) bereitgestellt werden. Vorteilhaft kann der Sensor in einem verjüngten Bereich eines Schaftabschnitts des Befestigungselements untergebracht werden und zusätzlich mit einer Schutzeinrichtung vor Beschädigung geschützt werden.

Eine solche Konfiguration hat Vorteile: Beispielsweise kann es bei Verankerungsgründen, wie zum Beispiel Brücken, herkömmlich vorkommen, dass ein Schadensfall nicht rechtzeitig erkannt wird. Unter Einsatz eines Befestigungselements gemäß einem exemplarischen Ausführungsbeispiel der Erfindung kann ein an dem Befestigungselement integrierter Sensor im in einem Verankerungsgrund gesetzten Zustand des Befestigungselements rechtzeitig kritische Zustände erkennen, zum Beispiel das Vorliegen einer Zugkraft oberhalb eines vorgebbaren Grenzwerts. Dadurch können drohende Schadensfälle rechtzeitig prognostiziert werden und kann entsprechend frühzeitig Abhilfe geschaffen werden. Beispielsweise kann so lange von einer ausreichenden Befestigungskraft eines gesetzten Befestigungselements ausgegangen werden, wie das Befestigungselement (zum Beispiel ein Anker) mindestens dieselbe Befestigungskraft bietet wie Bewährungsstahl.

Wird ein Sensor im Verjüngungsabschnitt des Schaftabschnitts eines Befestigungselements angeordnet, ist der Sensor mechanisch geschützt untergebracht. Um den Sensor vor einem gegebenenfalls im Umgebungsbereich des gesetzten Befestigungselements aggressiven chemischen Milieu (zum Beispiel alkalischer Mörtel zwischen einer Wandung des Verankerungsgrund und dem Befestigungselement) abzuschirmen, kann eine vorzugsweise als kompressibler Schaum ausgebildete Schutzeinrichtung im Verjüngungsabschnitt und den Sensor umgebend vorgesehen sein. Auf diese Weise kann zum Beispiel beim Aushärten des zuvor fluiden Mörtels entstehender mechanischer Druck vom Sensor ferngehalten werden, indem der kompressible Schaum den Druck vom Sensor abpuffert. Höchst vorteilhaft kann dadurch erreicht werden, dass ein Verfälschen von Sensorsignalen durch Krafteinwirkung auf den Sensor durch die Umgebung stark vermindert oder sogar ganz ausgeschlossen wird. Sensorsignale können dann unabhängig von Spritzmörtel oder sonstigen umfänglichen Einflüssen sein und können vorteilhaft lediglich auf das Befestigungselement selbst einwirkende Einflüsse, insbesondere Zugspannungen, wiedergeben. Vorteilhaft kann dabei sein, dass der besagte Schaum temperaturbeständig und brandschutzbeständig ist. Ein solcher Schaum kann flüssig in den Verjüngungsabschnitt auf den mindestens einen Sensor aufgespritzt werden und kann dann durch Aushärten dauerhaft verfestigt werden. Der ausgehärtete Schaum kann dann kompressibel sein, um artifizielle Kräfte des Spritzmörtels oder eines anderen Mediums von dem mindestens einen Sensor abzuschirmen.

Bevorzugt wird der Sensor ausgebildet und montiert, um im in den Verankerungsgrund gesetzten Zustand des Befestigungselements eine auf das Befestigungselement einwirkende Zugbelastung zu erfassen. Wenn beispielsweise das Befestigungselement in einem Biegebalken gesetzt ist, erzeugt eine von außen einwirkende Gewichtskraft oder dergleichen eine Zugbelastung auf das Befestigungselement, die unter ungünstigen Umständen das gesetzte Befestigungselement aus dem Verankerungsgrund lösen kann. Ein solches Versagen eines gesetzten Befestigungselements kann anhand der erfassten Zugbelastung prognostiziert werden. Zu diesem Zweck ist es vorteilhaft, mittels des mindestens einen Sensors gemessene Sensorsignale durch ein Empfängergerät absolut und/oder relativ auszuwerten. Bei einer absoluten Auswertung der Sensorsignale kann zum Beispiel ermittelt werden, welche absolute Zugbelastung auf das Befestigungselement einwirkt. Dadurch können kritische Zustände erkannt werden. Bei einer relativen Auswertung der Sensorsignale kann beispielsweise ermittelt werden, wie sich eine sensorisch erkannte Zugbelastung des Befestigungselements über die Zeit hinweg ändert. Dadurch können kritische Veränderungen dynamisch verfolgt werden.

Sensorsignale des mindestens einen Sensors können beispielsweise durch mindestens ein elektrisches Kabel aus dem Verankerungsgrund herausgeführt werden und an einer Signalschnittstelle des Befestigungselements bereitgestellt werden. An dieser Signalschnittstelle können die Signale kabelgebunden oder drahtlos an ein Empfängergerät übermittelt werden. Es ist auch möglich, die Sensorsignale in einer Speichereinrichtung an dem Befestigungselement zu speichern, beispielsweise in einem Speicher eines RFID-Tags. Von einem solchen RFID-Tag aus können dann die Sensordaten drahtlos an ein Empfängergerät, beispielsweise ein RFID-Lesegerät, übermittelt werden.

Gemäß einem bevorzugten Ausführungsbeispiel wird ein Befestigungselement geschaffen, dessen erstes Ende ein Verankerungsende und dessen zweites Ende ein Bauteilende oder Außenende sein kann. Ferner kann ein Schaftabschnitt innerhalb des Befestigungselements in axialer Richtung zwischen Verankerungsende und Bauteilende angeordnet und abschnittsweise radial verjüngt sein, wobei der Schaftabschnitt in radialer Richtung einen Abstand zu Untergrund oder Bauteil aufweisen kann. Darüber hinaus weist das Befestigungselement mindestens einen Sensor auf, der zum Erfassen von Verankerungsdaten bzw. Verankerungsparametern angeordnet sein kann. Eine Übertragungseinrichtung kann zum Übertragen der Verankerungsdaten bzw. Verankerungsparameter an einen Empfänger vorgesehen sein. In einem bevorzugten Ausführungsbeispiel kann eine Schutzeinrichtung, vorzugsweise kompressibler Schaum, in radialer Richtung über dem Sensor angeordnet sein.

Beispielsweise können die Verankerungsdaten bzw. Verankerungsparameter Temperatur, Dehnung und/oder Drehmoment angeben, etc.

Die Übertragungseinrichtung kann eine kabelgebundene Übertragungsleitung sein, die insbesondere in Harz gegossen gegossen sein kann. Es ist auch möglich, dass die Übertragungseinrichtung ein Funksender ist, der die Daten bzw. Messwerte zum Beispiel via NFC, Bluetooth und/oder WLAN übertragen kann. Weitere mögliche Funktechnologien , mit der die Übertragungseinrichtung kommunizieren kann, sind Narrowband IoT (NB-IoT) und LTE for Machine Type Communication (LTE-M). Allgemein können in der Übertragungseinrichtung Kommunikationsstandards in Form einer LPWAN (low-power wide-area network) Technologie implementiert werden.

Eine Empfängereinrichtung zum Empfangen der von dem Sensor erfassten Sensordaten kann zum Beispiel ein Computer, ein Smartphone, ein Tablet, etc. sein.

Als Schutzeinrichtung zum Schützen des Sensors vor mechanischer Beschädigung kann zum Beispiel ein Schaum eingesetzt werden, der vorzugsweise kompressibel und/oder feuchtigkeitsundurchlässig sein kann. Der Schaum kann vorzugsweise umfänglich um den verjüngten Abschnitt des Befestigungselements angeordnet werden und kann eine radiale Höhe aufweisen, sodass der Sensor in Umfangsrichtung vollflächig abgedeckt ist. Weiter bevorzugt kann diese radiale Höhe so bemessen werden, dass die Verjüngung des Schaftes erreicht ist und diese nicht überschreitet.

Bevorzugt kann der Schaum ein aromatisches Isocyanat aufweisen, insbesondere Diphenylmethan-diisocyanat (beispielsweise 90 bis 100 Gewichtsprozent) und 4,4'-Methylendiphenyldiisocyanat (beispielsweise 0,1 bis 1 Gewichtsprozent).

Beispielsweise kann das Befestigungselement eine Holzschraube mit Durchsteckmontage, eine Betonschraube mit Durchsteckmontage, ein Betonanker, eine Ankerstange bei chemischem Dübel, ein Kunststoffdübel für eine Holzschraube, etc., sein.

Bevorzugt kann das Befestigungselement am Verankerungsende ein Betonschraubengewinde oder ein Holzschraubengewinde aufweisen, und/oder am Bauteilende ein metrisches Gewinde. Ferner kann das Befestigungselement zwischen dem Verankerungsende und dem Bauteilende einen gewindefreien Schaft aufweisen, auf dem mindestens ein Sensor angeordnet ist.

Der besagte mindestens eine Sensor kann zum Beispiel ein Dehnmessstreifen-Sensor sein, der auf dem Befestigungselement angeordnet ist, bevorzugt auf dem gewindefreien Schaft aufgeklebt ist.

Hinsichtlich der Lage des Sensors am verjüngten Abschnitt kann die gesamten Länge des Befestigungselements verwendet werden, mit der Maßgabe, dass der dort angebrachte Sensor im Betrieb nicht beschädigt werden soll.

Gemäß einem bevorzugten Ausführungsbeispiel kann eine Rampe als Schutz bzw. Schutzvorrichtung für den mindestens einen Sensor vorgesehen werden, die bevorzugt an der verjüngten Stelle angeordnet sein kann.

Gemäß einem weiteren exemplarischen Ausführungsbeispiel der Erfindung ist ein Verfahren zur Herstellung des Befestigungselements mit den oben beschriebenen Merkmalen bereitgestellt. Bei diesem Herstellungsverfahren kann bevorzugt eine Schale um den verjüngten Schaftabschnitt herum angebracht werden und kann dann ein Einspritzen von Schaum erfolgen.

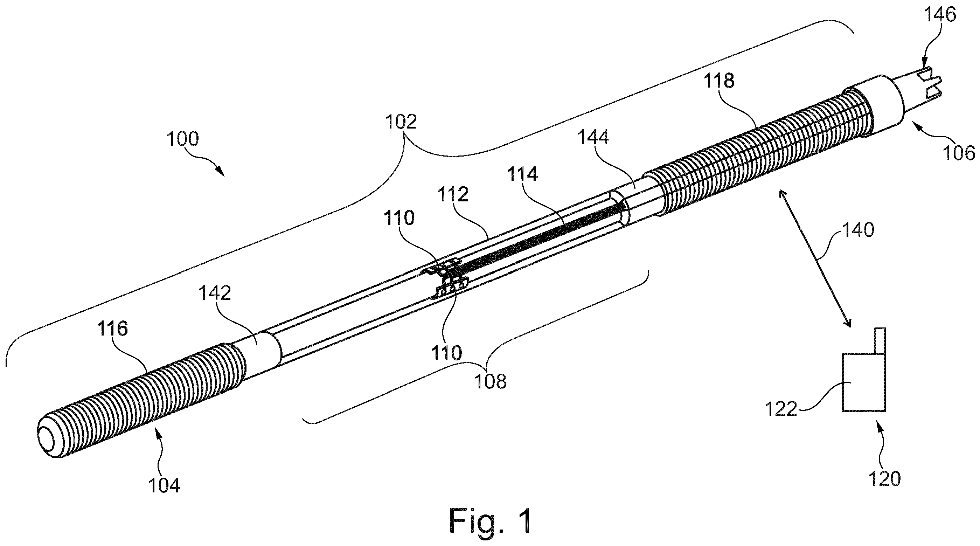

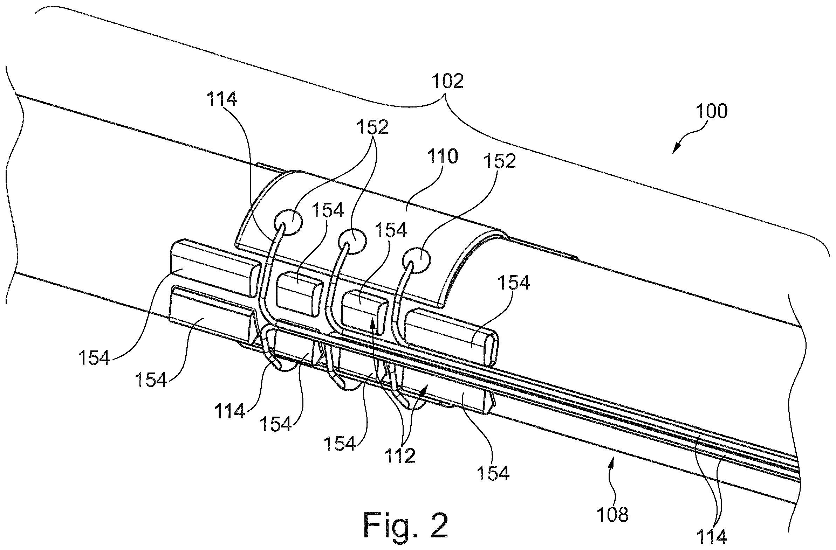

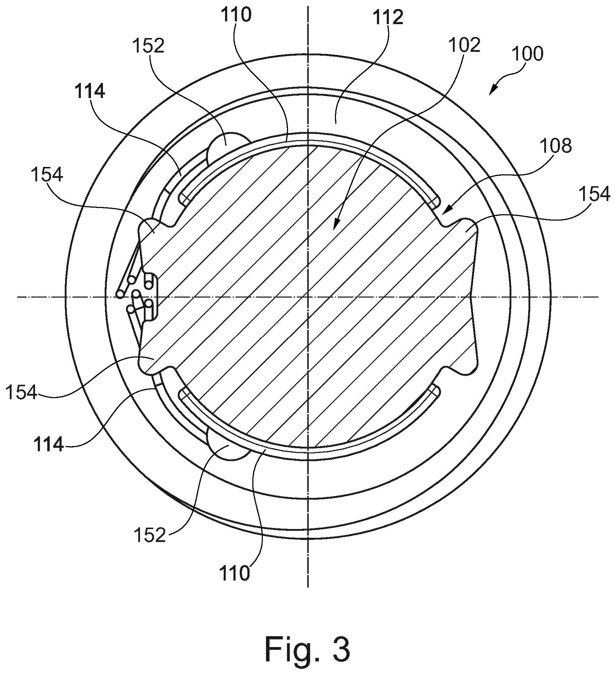

**Figur 1** zeigt ein Befestigungselement 100 gemäß einem exemplarischen Ausführungsbeispiel der Erfindung. **Figur 2** zeigt ein Detail eines solchen Befestigungselements 100. **Figur 3** zeigt eine entsprechende Querschnittsansicht eines Befestigungselements 100.

Genauer gesagt zeigt Figur 1 eine Anordnung 120 mit einem Befestigungselement 100 und einem Empfängergerät 122, das zum Empfangen von mittels eines Sensors 110 des Befestigungselements 100 erfassten Verankerungsdaten kommunizierfähig mit dem Sensor 110 gekoppelt ist. Das Empfängergerät 122 kann zum drahtlosen Kommunizieren mit dem Sensor 110 ausgebildet sein. Gemäß Figur 1 ist das Empfängergerät 122 ein portables Nutzer-Endgerät in Form eines Smartphones.

Das in Figur 1 im Detail dargestellte Befestigungselement 100 weist einen Schaftabschnitt 102 auf. Ein Teilabschnitt des Schaftabschnitts 102 ist gemäß Figur 1 gewindefrei ausgebildet.

Ein Verankerungsende 104 an einem ersten Ende des Schaftabschnitts 102 dient zum Verankern in einem (nicht gezeigten) Verankerungsgrund, zum Beispiel einer Gebäudewand. Das Verankerungsende 104 kann ein Verankerungsgewinde 116 aufweisen, zum Beispiel ein Betonschraubengewinde oder ein Holzschraubengewinde, oder auch ein metrisches Gewinde.

Darüber hinaus fungiert ein Außenende 106 an einem dem ersten Ende gegenüberliegenden zweiten Ende des Schaftabschnitts 102 zum Beispiel zum Befestigen eines Bauteils (nicht gezeigt) an dem Verankerungsgrund. Das Außenende 106 ist in einem in dem Verankerungsgrund verankerten Zustand des Befestigungselements 100 an einer Außenseite des Verankerungsgrunds anzuordnen. Das Außenende 106 kann bevorzugt ein Außengewinde 118 aufweisen, beispielsweise ein metrisches Außengewinde.

Darüber hinaus enthält das Befestigungselement 100 einen radial verjüngten Verjüngungsabschnitt 108 des Schaftabschnitts 102 axial zwischen dem Verankerungsende 104 und dem Außenende 106. Genauer gesagt ist der radial verjüngte Verjüngungsabschnitt 108 als ringförmige Aussparung an einer radialen Außenseite des Schaftabschnitts 102 ausgebildet.

In dem Verjüngungsabschnitt 108 versenkt angeordnet sind Sensoren 110 zum Erfassen von Verankerungsdaten des Befestigungselements 100 in dem Verankerungsgrund. Bei Anbringen der Sensoren 110 im Verjüngungsabschnitt 110 befinden sich die Sensoren 110 an der mechanisch schwächsten Stelle des Befestigungselements 100, d.h. im verjüngten Bereich des Schaftzentrums. Diese Sensordaten oder Verankerungsdaten können dazu verwendet werden, einen Setzerfolg des Befestigungselement in dem Verankerungsgrund zu überprüfen und langfristig zu überwachen. Die Sensoren 110 können zum Beispiel als Dehnmessstreifen ausgebildet werden, die im Verjüngungsabschnitt 108 auf den Schaftabschnitt 102 aufgeklebt werden können. Beispielsweise können die zum Beispiel als Dehnmessstreifen ausgebildeten Sensoren 110 als Vollbrücke verschaltet sein. Allgemein können die Sensoren 110 zum Erfassen einer Dehnung des Schaftabschnitts 102, eines Drehmoments des Schaftabschnitt 102 und/oder einer Temperatur ausgebildet sein.

Mit Vorteil ist an dem Befestigungselement 100 darüber hinaus eine im Weiteren näher beschriebene Schutzeinrichtung 112 zum Schützen der Sensoren 110 vor einer Beschädigung im Betrieb vorgesehen. Die Schutzeinrichtung 112 kann vorteilhaft einen kompressiblen und feuchtigkeitsundurchlässigen Schaum aufweisen. Bevorzugt kann ein solcher Schaum ein aromatisches Isocyanat aufweisen. Besagte Schutzeinrichtung 112 kann in dem radial verjüngten Verjüngungsabschnitt 108 und die Sensoren 110 schützend bedeckend angeordnet sein. Ebenfalls vorteilhaft kann die Schutzeinrichtung 112 umfänglich geschlossen in dem radial verjüngten Verjüngungsabschnitt 108 angeordnet sein. Ferner ist vorteilhaft, wenn die Schutzeinrichtung 112 in dem radial verjüngten Verjüngungsabschnitt 108 bis zu einer solchen radialen Höhe angeordnet ist, dass die Schutzeinrichtung 112 radial nicht über den Schaftabschnitt 102 übersteht. Besonders bevorzugt schließt die Schutzeinrichtung 112 mit dem Schaftabschnitt 102 bündig ab.

Zum Herstellen der Schutzeinrichtung 112 werden die in dem Verjüngungsabschnitt 108 angeordneten Sensoren 110 mit Schaum umspritzt, der auch in den restlichen Verjüngungsabschnitt 108 eingespritzt wird. Während des Spritzens von Schaum kann der Verjüngungsabschnitt 108 von einer Schale (nicht gezeigt) umgeben werden, um die räumliche Erstreckung der Schutzeinrichtung 112 vorzugeben oder zu begrenzen.

Ferner weist das Befestigungselement 100 gemäß Figur 1 eine Übertragungseinrichtung 114 zum Übertragen der Verankerungsdaten von dem Sensor 110 zu dem externen Empfängergerät 122 auf. Wie in Figur 1 gezeigt, kann die Übertragungseinrichtung 114 ein oder mehrere Übertragungskabel aufweisen, das oder die entlang des Schaftabschnitts 102 verlaufend angeordnet ist oder sind. Alternativ oder ergänzend kann die Übertragungseinrichtung 114 auch zum drahtlosen Übertragen der Verankerungsdaten ausgebildet sein. Hierfür kann zum Beispiel als Übertragungstechnologie Near Field Communication (NFC), Bluetooth, Wireless Local Area Network (WLAN), Narrowband Internet of Things (NB-IoT), Long Term Evolution (LTE) und/oder Low Power Wide Area Network (LPWAN) eingesetzt werden.

Wiederum Bezug nehmend auf Figur 1 ist dargestellt, wie das hier als Mobilfunkgerät ausgebildete Empfängergerät 122 kommunizierfähig gekoppelt mit den Sensoren 110 des Befestigungselements 100 ist, siehe das eine Datenübermittlung anzeigende Bezugszeichen 140. Am Verankerungsende 104 ist das Befestigungselement 100 mit dem Verankerungsgewinde 116 ausgestattet, das ein Eindrehen des Befestigungselements 100 in ein Befestigungsloch eines Verankerungsgrunds fördern kann. Am gegenüberliegenden Außenende 106 ist das Außengewinde 118 ausgebildet, das zum Beispiel zum Befestigen eines Bauteils (zum Beispiel eines Fensterrahmens) mittels Durchsteckmontage und Aufdrehen einer Befestigungsmutter ermöglichen kann. In einem axialen Zentralabschnitt des Schaftabschnitts 102 befindet sich der als zylindrischer Abschnitt mit abschnittsweise verringertem Außendurchmesser ausgebildete Verjüngungsabschnitt 108, der durch eine ringförmige Aussparung an dem Schaftabschnitt 102 realisiert ist. In diesem radial zurückversetzten Verjüngungsabschnitt 108 sind die hier als Dehnmessstreifen ausgebildeten Sensoren 110 aufgeklebt. Die Sensoren 110 erstrecken sich somit bis zu einer radialen Position, an der diese beim Setzen des Befestigungselements 100 in einen Verankerungsgrund vor einer mechanischen Berührung mit einer Wandung des Verankerungsgrunds geschützt sind. Eine als Kabelverbindung ausgebildete Übermittlungseinrichtung 114 übermittelt die elektrischen Sensorsignale der Sensoren 110 zu dem Empfängergerät 122 außerhalb des Verankerungsgrunds. Die gemäß Figur 1 abschnittsweise kabelgebundene Übermittlungseinrichtung 114 führt die Übermittlungskabel in axialer Richtung an einer Außenseite oder an einer Innenseite des Schaftabschnitts 102 bis ins Äußere des Verankerungslochs. Um die an einer Mantelfläche des Verjüngungsabschnitts 108 angebrachten (zum Beispiel aufgeklebten) Sensoren 110 vor einer mechanischen Beeinträchtigung beim Setzen und danach zu schützen, können die Sensoren 110 mit einem kompressiblen Material umgeben sein, das zum Beispiel mit einer radialen Mantelfläche von gewindefreien Schaftabschnitten 142, 144 bündig oder fluchtend abschließt. Anschaulich sind dadurch die Sensoren 110 in einer kompressiblen Matrix eingebettet, welche die Sensoren 110 vor Beschädigungen schützt und gleichzeitig eine präzise Erfassung von Verankerungsdaten, insbesondere einer mechanischen Dehnung des Schaftabschnitts 102, zulässt.

Mit Bezugszeichen 146 ist in Figur 1 ein Kommunizierende des Befestigungselements 100 dargestellt, an dem eine Übermittlung der sensorisch erfassten Verankerungsdaten an das Empfängergerät 122, kabelgebunden und/oder kabellos, erfolgt. Bei Bezugszeichen 146 kann auch eine Auswerteeinheit zum Anschließen an ein Empfängergerät 122 vorgesehen sein.

In Figur 2 ist ein Detail eines Schaftabschnitts 102 eines Befestigungselements 100 gezeigt, wie es zum Beispiel gemäß Figur 1 oder Figur 4 bis Figur 6 ausgebildet sein kann. Elektrische Kabel der Übermittlungseinrichtung 114 können an Sensorpads der Sensoren 110 angeschlossen werden, zum Beispiel mittels Lötkontakten 152. Rippen im Verjüngungsabschnitt 108 können Schutzrampen 154 der Schutzeinrichtung 112 bilden und können so ausgebildet sein, dass in Aussparungen zwischen diesen Rippen die elektrischen Kabel der Übermittlungseinrichtung 114 geführt sind. Dies führt zu einem zusätzlichen Schutz der Sensoren 110 gegen eine Fehlfunktion durch mechanische Beeinträchtigungen.

Die Kabel der Übermittlungseinrichtung 114 können in einer Vertiefung des Schaftabschnitts 102 geführt sein. Dadurch kann der Schutz der Kabel vor mechanischer Beeinträchtigung weiter verbessert werden. Vorteilhaft kann nach Einlegen der Kabel in die Vertiefung die Vertiefung mit Harz befüllt werden. Außerhalb der Vertiefung geführte Kabelabschnitte können durch eine Schaummasse geschützt werden, welche auch die Sensoren 110 schützend umgibt. Ein solcher kompressibler Schaum der Schutzeinrichtung 112 kann mantelseitige Kräfte (zum Beispiel von aushärtendem Mörtel) aufnehmen und dadurch die Sensoren 110 vor artifiziellen Krafteinflüssen schützen. Anders ausgedrückt kann die Schutzeinrichtung 112 ausgebildet werden, um von dem Verankerungsgrund auf den Verjüngungsabschnitt 108 mantelflächig einwirkende Kräfte von dem oder den Sensoren 110 abzuschirmen. Dadurch können die Sensoren 110 vor einer unerwünschten Beeinflussung geschützt werden und lediglich Kräfte von Interesse, insbesondere auf das Befestigungselement 100 einwirkende Zugspannungen, erfassen.

Anhand der Querschnittsansicht von Figur 3 ist gut erkennbar, wie bei der Konfiguration gemäß Figur 2 die in Radialrichtung zurückversetzten Sensoren 110 gegen Beschädigung geschützt sind und durch die Schutzeinrichtung 112 eine zusätzliche Sicherung gegen Beschädigung erfahren.

Das Befestigungselement 100 gemäß Figur 1 kann als Gewindestange oder als Ankerstange für einen chemischen Dübel eingesetzt werden. Beispielsweise kann das Befestigungselement 100 gemäß Figur 1 als Gewindestange oder Zugstab fungieren. Das Verankerungsende 104 kann in ein vorgebohrtes Bohrloch mit Mörtel eingeklebt werden. Am Außenende 106 kann zum Beispiel eine Mutter (nicht dargestellt in Figur 1) aufgeschraubt werden, um das Befestigungselement 100 am Verankerungsgrund zu verspannen. Alternativ kann das Befestigungselement 100 gemäß Figur 1 zum Beispiel auch zum Verspannen zwischen zwei Stahlseilen zum Einsatz kommen.

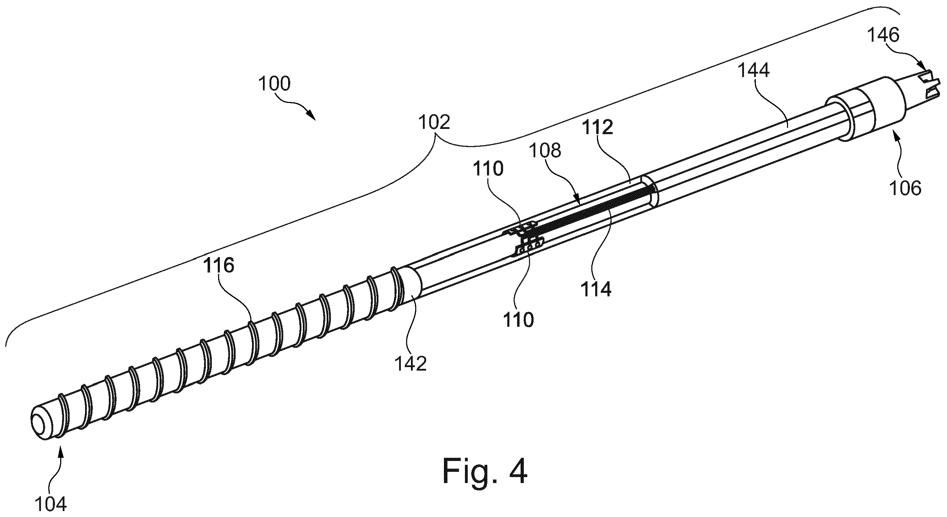

**Figur 4** zeigt ein Befestigungselement 100 gemäß einem anderen exemplarischen Ausführungsbeispiel der Erfindung.

Das Befestigungselement 100 gemäß Figur 4 ist als Holzschraube zur Durchsteckmontage ausgebildet. Das Befestigungselement 100 gemäß Figur 4 kann ohne Mörtel gesetzt werden.

Das Befestigungselement 100 gemäß Figur 4 unterscheidet sich von dem Befestigungselement 100 gemäß Figur 1 insbesondere dadurch, dass gemäß Figur 4 das Verankerungsgewinde 116 eine andere Steigung aufweist als gemäß Figur 1 und dass gemäß Figur 4 das Außengewinde 116 weggelassen ist. Somit eignet sich das Befestigungselement 100 gemäß Figur 4 insbesondere zum Eindrehen in einen Verankerungsgrund (nicht gezeigt) mit vorgebohrtem Verankerungsloch.

Alternativ zu Figur 4 kann ein als Holzschraube ausgebildetes Befestigungselement 100 gemäß einem anderen Ausführungsbeispiel der Erfindung am Verankerungsende 104 mit einer Bohrspitze ausgebildet sein und dann vorbohrungsfrei in einen Verankerungsgrund (vorzugsweise aus Holz) eingebracht werden.

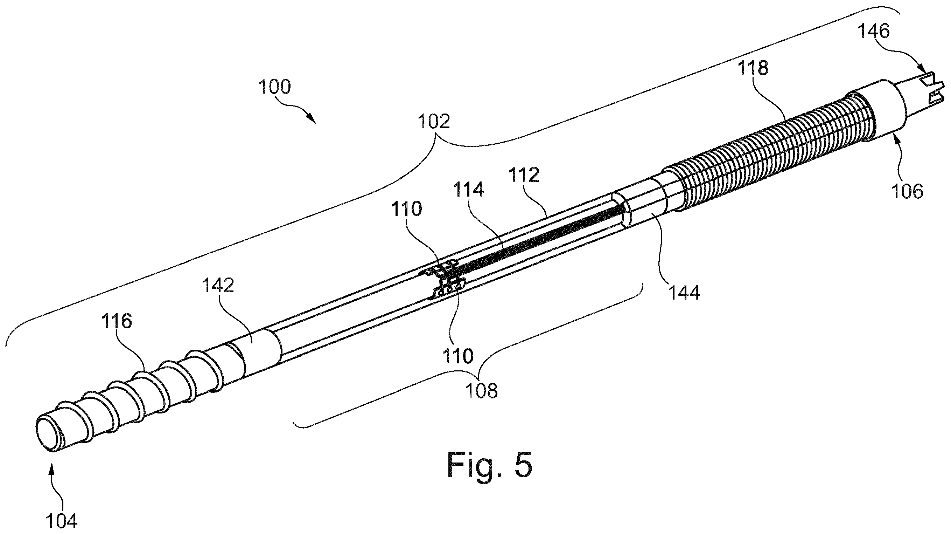

**Figur 5** zeigt ein Befestigungselement 100 gemäß einem weiteren exemplarischen Ausführungsbeispiel der Erfindung.

Das Befestigungselement 100 gemäß Figur 5 ist als Sensoranker oder als Betonschraube zur Durchsteckmontage konfiguriert.

Das in Figur 5 dargestellte Befestigungselement 100 unterscheidet sich von dem Ausführungsbeispiel gemäß Figur 4 insbesondere dadurch, dass gemäß Figur 5 am Außenende 106 ein metrisches Außengewinde 118, zum Beispiel zum Verspannen mittels einer nicht dargestellten Mutter bzw. zum Befestigen eines anzuschließenden Bauteils, vorgesehen ist.

Am Verankerungsende 104 kann das Befestigungselement 100 gemäß Figur 5 in ein vorgebohrtes Loch in einem zum Beispiel aus Beton ausgebildeten Verankerungsgrund eingeschraubt werden. Das Verankerungsgewinde 116 gemäß Figur 5 kann somit ein Betongewinde sein. Zwischen einer Wandung des Verankerungsgrunds und dem Befestigungselement 100 kann Mörtel zum Einkleben verwendet werden.

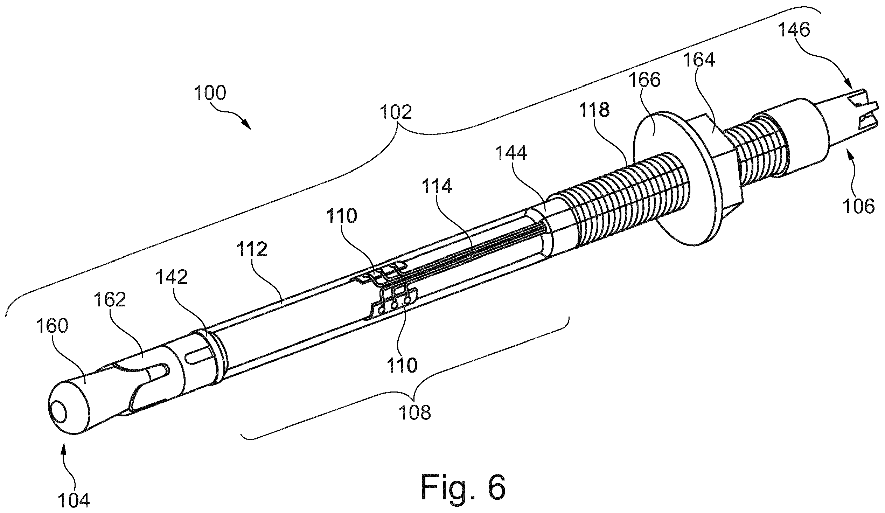

**Figur 6** zeigt ein Befestigungselement 100 gemäß noch einem anderen exemplarischen Ausführungsbeispiel der Erfindung.

Das Befestigungselement 100 gemäß Figur 6 ist als Bolzenanker, zum Beispiel als Betonanker, ausgebildet. Der Bolzenanker gemäß Figur 6 kann mit oder ohne Mörtel in einer Vorbohrung in einem Verankerungsgrund gesetzt werden.

Bei dem als Bolzenanker ausgebildeten Befestigungselement 100 gemäß Figur 6 ist am Verankerungsende 104 ein Konuskörper 160 gebildet, der sich vom Verankerungsende 104 zum Außenende 106 hin radial verjüngt. Verschiebbar auf dem Schaftabschnitt 102 im Bereich des Konuskörpers 160 (der auch als Spreizkörper bezeichnet werden kann) befindet sich eine axial verschiebbare Spreizhülse 162, zum Beispiel aus einem Metall wie Edelstahl. Im Bereich des Außenendes 106 ist ein Außengewinde 118 angebracht, auf dem eine Mutter 164 (optional gemeinsam mit einer Beilagscheibe 166) zum Setzen des Befestigungselements 100 aufgedreht werden kann. Um das Befestigungselement 100 gemäß Figur 6 in einem insbesondere vorgebohrten Verankerungsloch in einem Verankerungsgrund (zum Beispiel aus Beton) zu setzen, wird das Befestigungselement 100 zunächst ohne Mutter 164 (und der optionalen Beilagscheibe 166) in das Verankerungsloch eingeschlagen, das heißt unter Einwirkung einer axialen Kraft. Dadurch wird das Verankerungsende 104 in einem Bohrlochinneren angeordnet. Nachfolgend kann die Befestigungsmutter 164 (optional nach Aufsetzen der Beilagscheibe 166) von außen auf das Außengewinde 118 aufgedreht werden. Erreichen Befestigungsmutter 164 und die optionale Beilagscheibe 166 eine Außenfläche des Verankerungsgrunds, bewirkt ein weiteres Aufdrehen der Befestigungsmutter 164 eine Relativkraft in axialer Richtung zwischen Konuskörper 160 und Spreizhülse 162, die dazu führt, dass sich die Spreizhülse 162 in axialer Richtung auf dem Konuskörper 160 bewegt, wodurch sich die Spreizhülse 162 mit der Wandung des Verankerungsgrunds verspreizt. Dadurch wird ein Setzvorgang abgeschlossen. Während dieses Setzvorgangs und danach können mittels der Sensoren 110 Verankerungsdaten erfasst werden, die den Verankerungsvorgang und/oder den Verankerungszustand dokumentieren. Beispielsweise kann eine übermäßige mechanische Spannung am Ort der Sensoren 110 auf eine Verkeilung des Befestigungselements 100 beim Setzen und somit einen problematischen Setzvorgang mit unsicherer Setzzuverlässigkeit hindeuten. Indem die Sensoren 110 in dem Verjüngungsabschnitt 108 radial zurückversetzt sind und durch die Schutzeinrichtung 112 (zum Beispiel ausgebildet als kompressibler Schaum) mechanisch geschützt sind, kann ein ungehinderter Setzvorgang mit einer zuverlässigen Sensorfunktion kombiniert werden.

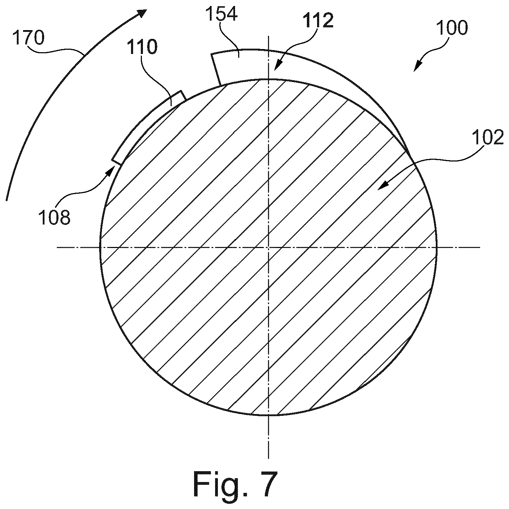

**Figur 7** zeigt eine Querschnittsansicht eines Befestigungselements 100 gemäß einem weiteren exemplarischen Ausführungsbeispiel der Erfindung.

Wie in Figur 7 dargestellt, kann die Schutzeinrichtung 112 eine Schutzrampe 154 aufweisen, die in einer Einschraubrichtung 170 des Befestigungselements 100 hinter dem Sensor 110 angeordnet ist. Die Schutzrampe 154 kann in dem radial verjüngten Verjüngungsabschnitt 108 angeordnet werden.

Der Querschnittsansicht gemäß Figur 7 ist zu entnehmen, wie ein jeweiliger Sensor 110 in Bezug auf die Schutzrampe 154 angeordnet ist, wenn das Befestigungselement 100 durch Drehen entlang Drehrichtung bzw. Einschraubrichtung 170 drehend in einem Verankerungsgrund gesetzt wird. Hierbei ist anzumerken, dass die Einschraubrichtung 170 durch die Gewinderichtung eines Verankerungsgewindes 116 definiert sein kann. Wie Figur 7 zu entnehmen ist, ist die als Rippe ausgebildete Schutzrampe 154 der Schutzeinrichtung 112 so angeordnet, dass sich der radial äußerste Abschnitt der Schutzrampe 154 in Setzrichtung an den Sensor 110 anschließt. Der Radius der Schutzrampe 154 nimmt dann ausgehend von dem zentrumsfernsten Punkt im Grenzbereich zu dem Sensor 110 kontinuierlich ab und mündet stetig in den Verjüngungsabschnitt 108. Durch diese Konfiguration befindet sich der Sensor 110 anschaulich in einem Abschirmungsbereich, der durch den achsenferneren und dem Sensor 110 zugewandten Bereich der Schutzrampe 154 definiert ist. Die Schutzrampe 154 kann zum Beispiel aus Metall hergestellt sein. Ohne Schutzrampen 154 kann es unter Umständen zu unerwünscht starken Kerbeffekten kommen. Das Vorsehen von einer oder mehreren Schutzrampen 154 kann zudem vorteilhaft bewirken, dass einen jeweiligen Sensor 110 umschließender Schaum der Schutzeinrichtung 112 sich an den ansonsten glatten Verjüngungsabschnitt 108 besser anlegt und besser anhaftet.

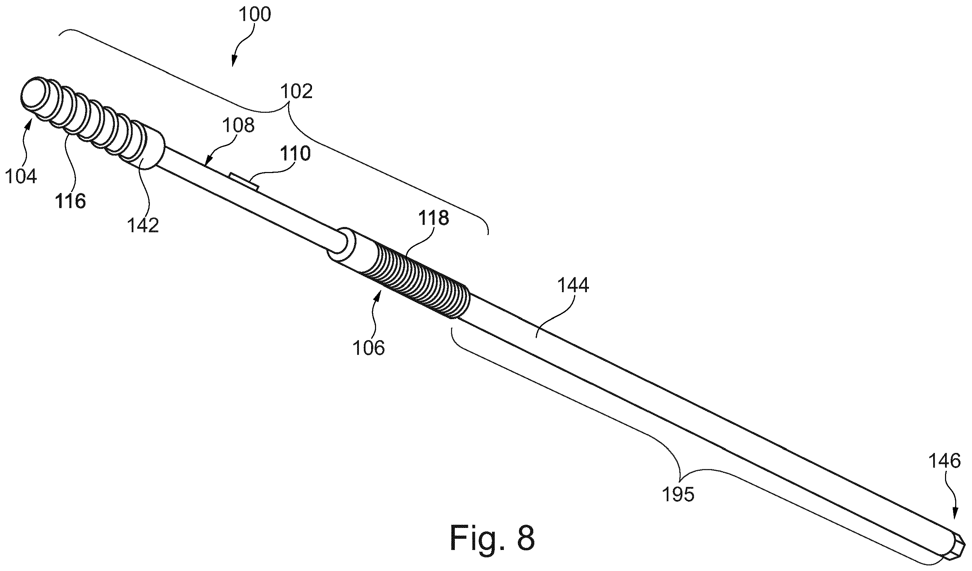

**Figur 8** zeigt ein Befestigungselement 100 gemäß noch einem anderen exemplarischen Ausführungsbeispiel der Erfindung.

Gemäß Figur 8 ist an dem Außenende 106 des Schaftabschnitts 102 ein langgestreckter gewindefreier Bolzenabschnitt als Verlängerungsabschnitt 195 einstückig angeschlossen. Der Verlängerungsabschnitt 195 erstreckt sich ausgehend von dem metrischen Außengewinde 118 bis zu dem Kommunizierende 146 des Befestigungselements 100 hin. Somit weist gemäß Figur 8 das Befestigungselement 100 den dargestellten Verlängerungsabschnitt 195 auf, der sich ausgehend von dem Außenende 106 des Schaftabschnitts 102 bis zu einem äußeren Ende des Befestigungselements 100 erstreckt, um dadurch das Befestigungselement 100 über das zweite Befestigungsende 106 des Schaftabschnitts 102 hinaus zu verlängern. Am metrischen Außengewinde 118 kann zum Beispiel eine (nicht gezeigte) Mutter montiert werden, um das Befestigungselement 100 an einem Verankerungsgrund zu verspannen. Beispielsweise kann der Verlängerungsabschnitt 195 mehr als 20 % oder sogar mehr als die Hälfte der Gesamtlänge des Befestigungselements 100 ausmachen. Der langgestreckte Verlängerungsabschnitt 195 erlaubt es, das Befestigungselement 100 weit aus dem Verankerungsgrund hervorstehen zu lassen. Dies kann zum Beispiel vorteilhaft sein, wenn am langgestreckten Verlängerungsabschnitt 195 eine andere (nicht gezeigte) Komponente angebracht werden soll. Alternativ oder ergänzend ist es möglich, einen Verlängerungsabschnitt 195 am Verankerungsende 104 des Schaftabschnitts 102 anzubringen (nicht gezeigt).

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Befestigungselement (100), aufweisend:
einen Schaftabschnitt (102);
ein Verankerungsende (104) an einem ersten Ende des Schaftabschnitts (102) zum Verankern in einem Verankerungsgrund;
ein Außenende (106) an einem gegenüberliegenden zweiten Ende des Schaftabschnitts (102), das in einem in dem Verankerungsgrund verankerten Zustand an einer Außenseite des Verankerungsgrunds anzuordnen ist;
einen radial verjüngten Verjüngungsabschnitt (108) des Schaftabschnitts (102) axial zwischen dem Verankerungsende (104) und dem Außenende (106), wobei der radial verjüngte Verjüngungsabschnitt (108) als ringförmige Aussparung an einer radialen Außenseite des Schaftabschnitts (102) ausgebildet ist;
einen zumindest teilweise in dem Verjüngungsabschnitt (108) angeordneten Sensor (110) zum Erfassen von Verankerungsdaten des Befestigungselements (100) in dem Verankerungsgrund; und
eine Schutzeinrichtung (112) zum Schützen des Sensors (110), **dadurch gekennzeichnet, dass** die Schutzeinrichtung (112) umfänglich geschlossen in dem radial verjüngten Verjüngungsabschnitt (108) angeordnet ist.

2. Befestigungselement (100) gemäß Anspruch 1, aufweisend zumindest eines der folgenden Merkmale:
eine Übertragungseinrichtung (114) zum Übertragen der Verankerungsdaten von dem Sensor (110) zu einem externen Empfängergerät (122), wobei die Übertragungseinrichtung (114) vorzugsweise mindestens ein Übertragungskabel aufweist, das zumindest abschnittsweise entlang des Schaftabschnitts (102) verlaufend angeordnet ist, wobei die Übertragungseinrichtung (114) vorzugsweise zum drahtlosen Übertragen der Verankerungsdaten ausgebildet ist, insbesondere mittels zumindest einer Technologie aus einer Gruppe bestehend aus Near Field Communication, Bluetooth, Wireless Local Area Network, Narrowband Internet of Things, Long Term Evolution und Low Power Wide Area Network;
wobei der Sensor (110) zum Erfassen von zumindest einem Parameter aus einer Gruppe ausgebildet ist, die besteht aus Zugspannung, Dehnung, Drehmoment und Temperatur;
wobei der Sensor (110) einen Dehnmessstreifen aufweist;
zumindest einen weiteren zumindest teilweise in dem Verjüngungsabschnitt (108) angeordneten Sensor (110) zum Erfassen von weiteren Verankerungsdaten des Befestigungselements (100) in dem Verankerungsgrund;
wobei die Schutzeinrichtung (112) feuchtigkeitsundurchlässiges Material aufweist, insbesondere einen feuchtigkeitsundurchlässigen Schaum;
wobei die Schutzeinrichtung (112) ausgebildet ist, von dem Verankerungsgrund auf den Verjüngungsabschnitt (108) mantelflächig einwirkende Kräfte von dem Sensor (110) abzuschirmen;
wobei die Schutzeinrichtung (112) zumindest teilweise in dem radial verjüngten Verjüngungsabschnitt (108) und den Sensor (110) schützend bedeckend angeordnet ist;
wobei die Schutzeinrichtung (112) in dem radial verjüngten Verjüngungsabschnitt (108) bis zu einer solchen radialen Höhe angeordnet ist, dass die Schutzeinrichtung (112) radial nicht über den Schaftabschnitt (102) übersteht, insbesondere mit dem Schaftabschnitt (102) bündig abschließt;
wobei das Verankerungsende (104) ein Verankerungsgewinde (116) aufweist, insbesondere ein Betonschraubengewinde, ein Holzschraubengewinde oder ein metrisches Gewinde;
wobei das Außenende (106) ein Außengewinde (118), insbesondere ein metrisches Außengewinde, aufweist;
wobei der Schaftabschnitt (102) zumindest abschnittsweise gewindefrei ausgebildet ist.

3. Befestigungselement (100) gemäß einem der vorherigen Ansprüche, wobei die Schutzeinrichtung (112) kompressibles Material aufweist, insbesondere einen kompressiblen Schaum.

4. Befestigungselement (100) gemäß dem vorherigen Anspruch, wobei die Schutzeinrichtung (112) ein kompressibler Ring ist.

5. Befestigungselement (100) gemäß einem der Ansprüche 1 bis 4, wobei die Schutzeinrichtung (112) mindestens eine Schutzrampe (154) aufweist, die bezogen auf eine Einschraubrichtung (170) des Befestigungselements (100) umfänglich hinter dem Sensor (110) angeordnet ist, insbesondere zumindest teilweise in dem radial verjüngten Verjüngungsabschnitt (108).

6. Befestigungselement (100) gemäß dem vorherigen Anspruch, wobei die Schutzrampe (154) als Rippe ausgebildet und so angeordnet ist, dass sich ein radial äußerster Abschnitt der Schutzrampe (154) in Setzrichtung an den Sensor anschließt.

7. Befestigungselement (100) gemäß einem der Ansprüche 1 bis 6, aufweisend eines der folgenden Merkmale:
ausgebildet als Holzschraube, insbesondere zur Durchsteckmontage;
ausgebildet als Betonschraube, insbesondere zur Durchsteckmontage;
ausgebildet als Bolzenanker, insbesondere als Betonanker;
ausgebildet als Ankerstange, insbesondere für einen chemischen Dübel;
ausgebildet als Kunststoffdübel, insbesondere für eine Holzschraube.

8. Befestigungselement (100) gemäß einem der Ansprüche 1 bis 7, aufweisend mindestens einen langgestreckten Verlängerungsabschnitt (195), der sich ausgehend von zumindest einem des Verankerungsendes (104) des Schaftabschnitts (102) und des Außenendes (106) des Schaftabschnitts (102) bis zu einem Ende des Befestigungselements (100) erstreckt.

9. Befestigungselement (100) gemäß dem vorherigen Anspruch, wobei der langgestreckte Verlängerungsabschnitt (195) gewindefrei ist.

10. Anordnung (120), aufweisend:
ein Befestigungselement (100) gemäß einem der Ansprüche 1 bis 9; und
ein Empfängergerät (122), das zum Empfangen von mittels des Sensors (110) erfassten Verankerungsdaten kommunizierfähig mit dem Sensor (110) gekoppelt oder koppelbar ist.

11. Anordnung (120) gemäß Anspruch 10, wobei das Empfängergerät (122) zum drahtlosen Kommunizieren mit dem Sensor (110) ausgebildet ist.

12. Anordnung (120) gemäß Anspruch 10 oder 11, wobei das Empfängergerät (122) aus einer Gruppe ausgewählt ist, die besteht aus einem Router, einem Computer und einem portablen Nutzer-Endgerät, insbesondere einem Smartphone oder einem Tablet.

13. Anordnung (120) gemäß einem der Ansprüche 10 bis 12, aufweisend den Verankerungsgrund, in dem das Befestigungselement (100) zumindest teilweise verankert ist.

14. Verfahren zum Herstellen eines Befestigungselements (100), wobei das Verfahren aufweist:
Ausbilden eines Verankerungsendes (104) an einem ersten Ende eines Schaftabschnitts (102) zum Verankern in einem Verankerungsgrund;
Ausbilden eines Außenendes (106) an einem gegenüberliegenden zweiten Ende des Schaftabschnitts (102), das in einem in dem Verankerungsgrund verankerten Zustand an einer Außenseite des Verankerungsgrunds anzuordnen ist;
Ausbilden eines radial verjüngten Verjüngungsabschnitts (108) des Schaftabschnitts (102) axial zwischen dem Verankerungsende (104) und dem Außenende (106), wobei der radial verjüngte Verjüngungsabschnitt (108) als ringförmige Aussparung an einer radialen Außenseite des Schaftabschnitts (102) ausgebildet wird;
Anordnen eines Sensors (110) zumindest teilweise in dem Verjüngungsabschnitt (108) zum Erfassen von Verankerungsdaten des Befestigungselements (100) in dem Verankerungsgrund; und
Ausbilden einer Schutzeinrichtung (112) zum Schützen des Sensors (110), **dadurch gekennzeichnet, dass** die Schutzeinrichtung (112) umfänglich geschlossen in dem radial verjüngten Verjüngungsabschnitt (108) angeordnet wird.

15. Verfahren gemäß Anspruch 14, wobei als Schutzeinrichtung (112) der zumindest teilweise in dem Verjüngungsabschnitt (108) angeordnete Sensor (110) mit Schaum umspritzt wird, der zumindest teilweise in den Verjüngungsabschnitt (108) eingespritzt wird, wobei das Befestigungselement (100) vorzugsweise während des Spritzens von Schaum zumindest abschnittsweise von einer Schale umgeben wird.

## Claims

1. A fastener (100), comprising:
a shaft portion (102);
an anchoring end (104) at a first end of the shaft portion (102) for anchoring in an anchoring base;
an outer end (106) at an opposite second end of the shaft portion (102), which is to be arranged on an outer side of the anchoring base in a state anchored in the anchoring base;
a radially tapered tapering portion (108) of the shaft portion (102) axially between the anchoring end (104) and the outer end (106), wherein the radially tapered tapering portion (108) is formed as an annular recess on a radial outer side of the shaft portion (102);
a sensor (110) arranged at least partially in the tapering portion (108) for detecting anchoring data of the fastener (100) in the anchoring base; and
a protection device (112) for protecting the sensor (110), **characterized in that** the protection device (112) is arranged circumferentially closed in the radially tapered tapering portion (108).

2. The fastener (100) according to claim 1, comprising at least one of the following features:
a transmission device (114) for transmitting the anchoring data from the sensor (110) to an external receiver device (122), wherein the transmission device (114) preferably comprises at least one transmission cable which is arranged extending at least in sections along the shaft portion (102), wherein the transmission device (114) is preferably designed for wireless transmission of the anchoring data, in particular by means of at least one technology from a group consisting of Near Field Communication, Bluetooth, Wireless Local Area Network, Narrowband Internet of Things, Long Term Evolution and Low Power Wide Area Network;
wherein the sensor (110) is designed for detecting at least one parameter from a group consisting of tensile stress, strain, torque and temperature;
wherein the sensor (110) comprises a strain gauge;
at least one further sensor (110) arranged at least partially in the tapering portion (108) for detecting further anchoring data of the fastener (100) in the anchoring base;
wherein the protection device (112) comprises moisture-impermeable material, in particular a moisture-impermeable foam;
wherein the protection device (112) is designed to shield forces acting from the anchoring base on the tapering portion (108) from the sensor (110);
wherein the protection device (112) is arranged at least partially in the radially tapered tapering portion (108) and protectively covering the sensor (110);
wherein the protection device (112) is arranged in the radially tapered tapering portion (108) up to such a radial height that the protection device (112) does not protrude radially beyond the shaft portion (102), in particular terminates flush with the shaft portion (102);
wherein the anchoring end (104) comprises an anchoring thread (116), in particular a concrete screw thread, a wood screw thread or a metric thread;
wherein the outer end (106) comprises an external thread (118), in particular a metric external thread;
wherein the shaft portion (102) is designed to be thread-free at least in sections.

3. The fastener (100) according to one of the preceding claims, wherein the protection device (112) comprises compressible material, in particular a compressible foam.

4. The fastener (100) according to the preceding claim, wherein the protection device (112) is a compressible ring.

5. The fastener (100) according to one of claims 1 to 4, wherein the protection device (112) comprises at least one protection ramp (154) which is arranged circumferentially behind the sensor (110) with respect to a screw-in direction (170) of the fastener (100), in particular at least partially in the radially tapered tapering portion (108).

6. The fastener (100) according to the preceding claim, wherein the protection ramp (154) is designed as a rib and is arranged such that a radially outermost portion of the protection ramp (154) adjoins the sensor in the setting direction.

7. The fastener (100) according to one of claims 1 to 6, comprising one of the following features:
designed as a wood screw, in particular for push-through mounting;
designed as a concrete screw, in particular for push-through mounting;
designed as a bolt anchor, in particular as a concrete anchor;
designed as an anchor rod, in particular for a chemical dowel;
designed as a plastic dowel, in particular for a wood screw.

8. The fastener (100) according to one of claims 1 to 7, comprising at least one elongated extension portion (195) which extends from at least one of the anchoring end (104) of the shaft portion (102) and the outer end (106) of the shaft portion (102) to an end of the fastener (100).

9. The fastener (100) according to the preceding claim, wherein the elongated extension portion (195) is thread-free.

10. An arrangement (120), comprising:
a fastener (100) according to one of claims 1 to 9; and
a receiver device (122) which is or can be communicatively coupled to the sensor (110) for receiving anchoring data detected by means of the sensor (110).

11. The arrangement (120) according to claim 10, wherein the receiver device (122) is designed for wireless communication with the sensor (110).

12. The arrangement (120) according to claim 10 or 11, wherein the receiver device (122) is selected from a group consisting of a router, a computer and a portable user terminal, in particular a smartphone or a tablet.

13. The arrangement (120) according to one of claims 10 to 12, comprising the anchoring base in which the fastener (100) is at least partially anchored.

14. A method for producing a fastener (100), the method comprising:
forming an anchoring end (104) at a first end of a shaft portion (102) for anchoring in an anchoring base;
forming an outer end (106) at an opposite second end of the shaft portion (102), which is to be arranged on an outer side of the anchoring base in a state anchored in the anchoring base;
forming a radially tapered tapering portion (108) of the shaft portion (102) axially between the anchoring end (104) and the outer end (106), wherein the radially tapered tapering portion (108) is formed as an annular recess on a radial outer side of the shaft portion (102);
arranging a sensor (110) at least partially in the tapering portion (108) for detecting anchoring data of the fastener (100) in the anchoring base; and
forming a protection device (112) for protecting the sensor (110), **characterized in that** the protection device (112) is arranged circumferentially closed in the radially tapered tapering portion (108).

15. The method according to claim 14, wherein as the protection device (112) the sensor (110) arranged at least partially in the tapering portion (108) is overmolded with foam which is at least partially injected into the tapering portion (108), wherein the fastener (100) is preferably surrounded by a shell at least in sections during the injection of foam.

## Revendications

1. Élément de fixation (100), présentant :
une section de tige (102) ;
une extrémité d'ancrage (104) au niveau d'une première extrémité de la section de tige (102) en vue d'un ancrage dans un fond d'ancrage ;
une extrémité extérieure (106) à une seconde extrémité opposée de la section de tige (102), qui, dans un état ancré dans le fond d'ancrage, doit être agencée à l'extérieur du fond d'ancrage ;
une section de rétrécissement (108) rétrécie radialement de la section de tige (102) axialement entre l'extrémité d'ancrage (104) et l'extrémité extérieure (106), dans lequel la section de rétrécissement (108) rétrécie radialement est réalisée sous la forme d'un évidement annulaire sur un côté extérieur radial de la section de tige (102) ;
un capteur (110) agencé au moins partiellement dans la section de rétrécissement (108) pour enregistrer des données d'ancrage de l'élément de fixation (100) dans le fond d'ancrage ; et
un dispositif de protection (112) pour protéger le capteur (110), **caractérisé en ce que** le dispositif de protection (112) est agencé fermé en périphérie dans la section de rétrécissement (108) rétrécie radialement.

2. Élément de fixation (100) selon la revendication 1, présentant au moins une des caractéristiques ci-dessous :
un dispositif de transmission (114) permettant de transmettre les données d'ancrage depuis le capteur (110) vers un appareil récepteur externe (122), dans lequel le dispositif de transmission (114) présentant de préférence au moins un câble de transmission qui est agencé au moins par sections le long de la partie de tige (102), dans lequel le dispositif de transmission (114) est conçu de préférence pour transmettre sans fil les données d'ancrage, en particulier au moyen d'au moins une technologie issue d'un groupe constitué de Near Field Communication (Communication en champ proche), Bluetooth, Wireless Local Area Network (réseau local sans fil), Narrowband Internet of Things (Internet des objets à bande étroite), Long Term Evolution (évolution à long terme) et Low Power Wide Area Network (réseau étendu à faible consommation) ;
le capteur (110) est conçu pour enregistrer au moins un paramètre issu d'un groupe constitué de tension en traction, allongement, couple et température ;
le capteur (110) présente une jauge de déformation ;
au moins un capteur supplémentaire (110) disposé au moins partiellement dans la section de rétrécissement (108) pour enregistrer des données d'ancrage supplémentaires de l'élément de fixation (100) dans le fond d'ancrage ;
le dispositif de protection (112) présente un matériau imperméable à l'humidité, en particulier une mousse imperméable à l'humidité ;
le dispositif de protection (112) est conçu pour protéger le capteur (110) contre des forces s'exerçant à plat sur l'enveloppe, du fond d'ancrage jusque sur la section de rétrécissement (108) ;
dans lequel le dispositif de protection (112) est agencé au moins partiellement dans la section de rétrécissement (108) rétrécie radialement et recouvre le capteur (110) de manière protectrice ;
le dispositif de protection (112) est agencé dans la section de rétrécissement (108) radialement rétrécie jusqu'à une hauteur radiale telle que le dispositif de protection (112) ne dépasse pas radialement de la section de tige (102), en particulier arrive au ras de la section de tige (102) ;
dans lequel l'extrémité d'ancrage (104) présente un filetage d'ancrage (116), en particulier un filetage de vis à béton, un filetage de vis à bois ou un filetage métrique ;
dans lequel l'extrémité extérieure (106) présente un filetage extérieur (118), en particulier un filetage extérieur métrique ;
dans lequel la section de tige (102) est réalisée au moins partiellement sans filetage.

3. Élément de fixation (100) selon l'une quelconque des revendications précédentes, dans lequel le dispositif de protection (112) présente un matériau compressible, en particulier une mousse compressible.

4. Élément de fixation (100) selon la revendication précédente, dans lequel le dispositif de protection (112) est un anneau compressible.

5. Élément de fixation (100) selon l'une quelconque des revendications 1 à 4, dans lequel le dispositif de protection (112) présente au moins une rampe de protection (154) agencée derrière le capteur (110) de manière périphérique par rapport à une direction de vissage (170) de l'élément de fixation (100), en particulier au moins partiellement dans la section de rétrécissement (108) rétrécie radialement.

6. Élément de fixation (100) selon la revendication précédente, dans lequel la rampe de protection (154) est conçue sous la forme d'une nervure et est agencée de telle manière qu'une section radialement la plus à l'extérieur de la rampe de protection (154) se raccorde au capteur dans la direction de pose.

7. Élément de fixation (100) selon l'une quelconque des revendications 1 à 6, présentant au moins une des caractéristiques ci-dessous :
réalisé sous la forme d'une vis à bois, en particulier en vue d'un montage traversant ;
réalisé sous la forme d'une vis à béton, en particulier en vue d'un montage traversant ;
réalisé sous la forme d'un boulon d'ancrage, en particulier sous la forme d'un ancrage à béton
réalisé sous la forme d'une tige d'ancrage, en particulier pour une cheville chimique ;
réalisé sous la forme d'une cheville en plastique, en particulier destinée à une vis à bois ;

8. Élément de mesure (100) selon l'une quelconque des revendications 1 à 7, présentant au moins une section de prolongement (195) allongée qui s'étend à partir d'au moins une parmi l'extrémité de fixation (104) de la section de tige (102) et l'extrémité extérieure de fixation (106) de la section de tige (102) jusqu'à une extrémité de l'élément de fixation (100).

9. Élément de fixation (100) selon la revendication précédente, dans lequel la partie de prolongement allongée (195) est sans filetage.

10. Agencement (120), présentant :
un élément de fixation (100) selon l'une quelconque des revendications 1 à 9 ; et
un appareil récepteur (122) qui est couplé ou peut être couplé de manière à pouvoir communiquer avec le capteur (110) afin de recevoir des données d'ancrage enregistrées au moyen du capteur (110).

11. Agencement (120) selon la revendication 10, dans lequel l'appareil récepteur (122) est conçu pour communiquer sans fil avec le capteur (110).

12. Agencement (120) selon la revendication 10 ou 11, dans lequel le dispositif récepteur (122) est sélectionné dans un groupe constitué d'un routeur, d'un ordinateur et d'un terminal utilisateur portable, en particulier d'un smartphone ou d'une tablette.

13. Système (120) selon l'une quelconque des revendications 10 à 12, présentant le fond d'ancrage dans lequel l'élément de fixation (100) est ancré au moins partiellement.

14. Procédé de fabrication d'un élément de fixation (100), dans lequel le procédé comprend les étapes consistant à :
réaliser une extrémité d'ancrage (104) à une première extrémité d'une section de tige (102) en vue d'un ancrage dans un fond d'ancrage ;
réaliser une extrémité extérieure (106) à une seconde extrémité opposée de la section de tige (102), qui, dans un état ancré dans le fond d'ancrage, doit être agencée à l'extérieur du fond d'ancrage ;
réaliser une section de rétrécissement (108) rétrécie radialement de la section de tige (102) axialement entre l'extrémité d'ancrage (104) et l'extrémité extérieure (106), dans lequel la section de rétrécissement (108) rétrécie radialement est réalisée sous la forme d'un évidement annulaire sur un côté extérieur radial de la section de tige (102) ;
disposer un capteur (110) au moins partiellement dans la section de rétrécissement (108) pour enregistrer des données d'ancrage de l'élément de fixation (100) dans le fond d'ancrage ; et
réaliser un dispositif de protection (112) pour protéger le capteur (110), **caractérisé en ce que** le dispositif de protection (112) est agencé fermé en périphérie dans la section de rétrécissement (108) rétrécie radialement.

15. Procédé selon la revendication 14, dans lequel, en tant que dispositif de protection (112), le capteur (110) agencé au moins partiellement dans la section de rétrécissement (108) est surmoulé avec de la mousse qui est injectée au moins partiellement dans la section de rétrécissement (108), dans lequel l'élément de fixation (100) étant de préférence entouré d'une coque au moins partiellement pendant l'injection de mousse.
